(19) Europäisches Patentamt / European Patent Office / Office européen des brevets

(11) **EP 3 494 388 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **17751304.1**

(22) Anmeldetag: **25.07.2017**

(51) Int Cl.:
**G01N 21/958** (2006.01)   **G01B 11/26** (2006.01)

(86) Internationale Anmeldenummer:
**PCT/EP2017/068803**

(87) Internationale Veröffentlichungsnummer:
**WO 2018/024550 (08.02.2018 Gazette 2018/06)**

(54) **VORRICHTUNG UND VERFAHREN ZUR BESTIMMUNG EINES DOPPELBILD-SICHTWINKELS**

APPARATUS AND METHOD FOR DETERMINING A DOUBLE IMAGE VIEWING ANGLE

DISPOSITIF ET PROCÉDÉ POUR DÉTERMINER UN ANGLE DE VISÉE D'IMAGE DOUBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2016 DE 102016114485**

(43) Veröffentlichungstag der Anmeldung:
**12.06.2019 Patentblatt 2019/24**

(73) Patentinhaber: **Isra Surface Vision GmbH**
**45699 Herten (DE)**

(72) Erfinder:
• **KUBIAK, Rolf**
**44269 Dortmund (DE)**
• **RIPPERDA, Christian**
**50678 Köln (DE)**
• **WEIGT, Paul**
**44869 Bochum (DE)**

(74) Vertreter: **Keil & Schaafhausen Patentanwälte PartGmbB**
**Friedrichstraße 2-6**
**60323 Frankfurt am Main (DE)**

(56) Entgegenhaltungen:
| | |
|---|---|
| DE-A1- 10 112 935 | DE-A1-102015 014 919 |
| DE-U1-202013 008 909 | US-A- 4 249 823 |
| US-A- 4 837 449 | US-A- 5 446 536 |
| US-A- 5 446 536 | US-A- 5 726 749 |
| US-A1- 2010 232 677 | US-A1- 2010 232 677 |

• **Thomas Nestl ET AL: "Wissensbasierte Methodik zur Bewertung gekrümmter Glasscheiben in der Automobilentwicklung zur Erlangung des akademischen Grades MASTERARBEIT Masterstudium Wirtschaftsingenieurwesen-Maschinenbau eingereicht an der", , 1 November 2014 (2014-11-01), XP055719438, Retrieved from the Internet: URL:https://diglib.tugraz.at/download.php? id=5aa24877ddee7&location=browse [retrieved on 2020-07-31]**
• **Nestl Thomas: "Abschlussarbeiten-Einreichen/Publikation", TUGRAZonline, 8 February 2021 (2021-02-08), pages 1-3, XP055773569, Retrieved from the Internet: URL:https://online.tugraz.at/tug_online/wb Abs.showThesis?pThesisNr=58552&pOrgNr=37 &p PersNr=77834 [retrieved on 2021-02-08]**

**Beschreibung**

Die Erfindung betrifft eine Vorrichtung zur Bestimmung eines Sichtwinkels einer Lichtquelle an einem transparenten Objekt. Die Erfindung betrifft ferner ein Verfahren zur Bestimmung eines Sichtwinkels.

Nach der Regelung Nr. 43 der Wirtschaftskommission der Vereinten Nationen für Europa (UNECE) über einheitliche Bedingungen der Sicherheitsverglasungswerkstoffe und ihres Einbaus in Fahrzeuge vom 12. Februar 2014 müssen transparente Objekte wie Windschutzscheiben oder andere Scheiben einer Prüfung auf Doppelbilder unterzogen werden. Gemäß der Regelung ist ein Doppelbild ein zusätzlich zu dem primären, hellen Bild (Primärbild) auftretendes sekundäres Bild (Sekundärbild) eines Gegenstands. Das Sekundärbild wird insbesondere nachts als störend empfunden, wenn der Gegenstand (beispielsweise die Scheinwerfer eines herannahenden Fahrzeugs oder das Licht einer Straßenlaterne) im Kontrast zur Umgebung sehr hell ist.

Der Doppelbildwinkel $\rho$ (auch als Doppelbildtrennung bezeichnet) ist der Winkel zwischen den Positionen des Primär- und des Sekundärbildes eines Gegenstands. Der Doppelbildwinkel $\rho$ wird durch die geometrischen Eigenschaften des transparenten Objekts bestimmt und ist unabhängig von der Position des Betrachters und des Gegenstands. Der Doppelbildwinkel $\rho$ beschreibt somit eine Eigenschaft des transparenten Objekts. Seine Berechnung für keilförmige transparente Objekte wird unten als Gleichung F1 angegeben. Demgegenüber beschreibt der Sichtwinkel $\sigma$ den Winkel, unter dem ein Betrachter oder eine Kamera ein Doppelbild eines Gegenstands wahrnimmt. Der Sichtwinkel $\sigma$ ist somit abhängig von der Position des Betrachters oder der Kamera, der Position der Lichtquelle und den geometrischen Eigenschaften des transparenten Objekts.

Sekundärbilder werden durch Mehrfachreflexion und Transmission von Licht erzeugt. Im Rahmen der vorliegenden Erfindung werden insbesondere Sekundärbilder betrachtet, die in Transmission entstehen, d.h. wenn der Gegenstand durch das transparente Objekt hindurch betrachtet wird.

In der genannten Regelung sind Verfahren zur Prüfung des Doppelbildwinkels aufgeführt. Bei einem bekannten Verfahren ist eine Windschutzscheibe unter einem vorgegebenen Neigungswinkel und in einem Abstand zu einer beleuchteten Platte mit einem Gegenstand in Form eines Ring-Lochs angeordnet. Die beleuchtete Ring-Loch-Platte wird durch die Windschutzscheibe hindurch beobachtet, wobei die Beobachtung in einer horizontalen Ebene, in der ein Mittelpunkt der Ring-Loch-Platte liegt, erfolgt. Die Ring-Loch-Platte wird nacheinander einzeln durch jeden Abschnitt der zu prüfenden Windschutzscheibe betrachtet. Wenn sich an einer Stelle der Windschutzscheibe ein Sekundärbild des Loches über den Innenrand eines Primärbilds des Rings hinaus verschiebt, wird ein Grenzwert für einen Doppelbildwinkel überschritten und die Windschutzscheibe als nicht den Qualitätsanforderungen entsprechend eingestuft.

Bei einem anderen bekannten Verfahren ist eine Windschutzscheibe zwischen einem Beobachtungs- und einem Kollimationsfernrohr angeordnet. Das Kollimationsfernrohr bildet im Unendlichen ein Polarkoordinatensystem mit einem hellen Punkt im Mittelpunkt ab. In der Brennebene des Beobachtungsfernrohrs befindet sich auf der optischen Achse noch ein dunkler Punkt. Der Doppelbildwinkel wird als Abstand zweier durch das Beobachtungsfernrohr dargestellten helle Punkte in dem Polarkoordinatensystem abgelesen, wobei der erste Punkt das Primärbild und der zweite helle Punkt das Sekundärbild darstellen. Durch die gleichzeitige Abbildung des Polarkoordinatensystems kann der Doppelbildwinkel genauer als bei der zuvor dargestellten Methode bestimmt werden.

Aus dem Dokument US 2010/0232677 A1 sind verschiedene Verfahren und Vorrichtungen zur Bestimmung des Doppelbildwinkels bekannt.

Die Prüfung auf Doppelbilder gewinnt zunehmend an Bedeutung. Doppelbilder verursachen eine schlechte kosmetische Anmutung von Scheiben. Zudem werden aufgrund der inzwischen verstärkt in Fahrzeugen integrierten Head-up-Displays neue beziehungsweise erhöhte Anforderungen bezüglich Doppelbildern bei Scheiben gestellt. Überdies können auch in Assistenzsystemen von Fahrzeugen eingesetzte Kameras durch ein Doppelbild gestört werden.

Um die hohen Anforderungen zu erfüllen, soll der Doppelbildwinkel insbesondere für Automobilglas möglichst vollflächig mit einer sehr hohen Messpunktdichte geprüft werden, wobei pro Scheibe bis zu 2 Millionen Messpunkte gefordert werden. Hierbei darf der Doppelbildwinkel einer den Qualitätsanforderungen entsprechenden Scheibe in einem Sichtbereich einen maximal zulässigen Wert nicht überschreiten.

Ein Nachteil der oben beschriebenen Prüfungsverfahren nach der Regelung Nr. 43 ist, dass die Messung an jedem Punkt der zu prüfenden Scheibe einzeln durchgeführt werden muss, was zeitaufwendig ist. Sollen möglichst viele Scheiben in kurzer Zeit untersucht werden, müssen mehrere Prüfungsvorrichtungen gleichzeitig betrieben werden. Dies verursacht zusätzliche Kosten. Des Weiteren muss zumindest entweder die Scheibe oder die beleuchtete Platte zwischen zwei aufeinander folgenden Messpunkten bewegt werden. Die hohe Anzahl von Bewegungen macht das Verfahren kompliziert, erhöht die Gefahr von Justierfehlern sowie den Verschleiß der bewegten Teile.

Die Aufgabe der vorliegenden Erfindung besteht somit darin, eine Vorrichtung zur Bestimmung eines Sichtwinkels an einem transparenten Objekt zu schaffen, die einfach aufgebaut ist und den Sichtwinkel mit hoher Messpunktdichte auch an transparenten Objekten mit großer Fläche schnell und zuverlässig bestimmen kann. Die Aufgabe besteht ferner darin, ein Verfahren zur Bestimmung eines Sichtwinkels an einem transparenten Objekt anzugeben, mit dem ein transparentes Objekt mit hoher Messpunktdichte hinsichtlich des Sichtwinkels einfach und schnell geprüft werden kann.

Die obige Aufgabe wird gelöst durch eine Vorrichtung mit den Merkmalen des Anspruchs 1.

Im Rahmen der Erfindung wird unter dem Begriff Volumenelement ein 3-dimensionaler Abschnitt des transparenten Objekts verstanden, der sich über die gesamte Dicke des transparenten Objekts, also von dessen Vorderseite bis zu dessen Rückseite, erstreckt. Hierbei wird als Vorderseite des transparenten Objekts eine der Beleuchtungseinrichtung zugewandte Seite des transparenten Objekts und unter Rückseite entsprechend eine der Vorderseite gegenüberliegende Seite des transparenten Objekts bezeichnet. Das transparente Objekt setzt sich daher aus einer Vielzahl von Volumenelementen zusammen. Im Allgemeinen können die an verschiedenen Volumenelementen des transparenten Objekts entstehenden Sichtwinkel einen unterschiedlichen Wert haben. Jedes Volumenelement wird durch eine einzige Lichtquelle der Vielzahl von Lichtquellen der Beleuchtungseinrichtung beleuchtet. Die Beleuchtungseinrichtung befindet sich vor dem transparenten Objekt, während das Target entlang des Lichtwegs hinter dem transparenten Objekt angeordnet ist. Die Bestimmung des Sichtwinkels erfolgt somit in Transmission.

Bei dem transparenten Objekt handelt es sich bevorzugt um eine Scheibe, besonders bevorzugt um eine Windschutzscheibe. Insbesondere kann die Scheibe ganz oder teilweise aus vorgespanntem Glas oder Verbundglas bestehen. Des Weiteren kann es sich bei der Scheibe beispielsweise um eine Glasscheibe, ein Sicherheitsglas mit Kunststoff, eine Glas-Kunststoff-Verglasung, eine Kunststoffverglasung, ein Verbundsicherheitsglas oder ein Panzerglas handeln.

Transparente Objekte, insbesondere Windschutzscheiben, werden zur Messung des Sichtwinkels typischerweise unter einem vorgegebenen Neigungswinkel angeordnet, wobei der vorgegebene Neigungswinkel besonders bevorzugt der späteren Einbaulage des transparenten Objekts entspricht. Hierbei sind die Lichtquellen und die Kamera auf einer horizontalen Ebene angeordnet. Der Neigungswinkel eines transparenten Objekts ist dabei der Winkel, den eine Verbindungslinie von einem oberen zu einem unteren Rand des transparenten Objekts mit einer Linie entlang einer vertikalen Richtung einschließt. Die Höhe des transparenten Objekts ist seine Ausdehnung entlang der vertikalen Richtung. Das transparente Objekt kann relativ zu der Beleuchtungseinrichtung und dem Target zumindest in horizontaler Richtung bewegt werden. Beispielsweise ist die Einbaulage einer Windschutzscheibe bei einer Prüfung des Sichtwinkels, insbesondere ihr Neigungswinkel, dadurch vorgegeben, wie die Windschutzscheibe in einem Fahrzeug eingesetzt werden soll. Die horizontale Ebene ist in diesem Fall parallel zur Ebene des Untergrunds des Fahrzeugs.

Das Target ist durch eine Aufnahmefläche (wie beispielsweise ein Film, ein CCD-Chip oder ein CMOS-Chip) oder Bildsensor der mindestens einen Kamera gebildet, so dass in diesem Fall die Kamera die Primär- und Sekundärbilder direkt erfasst.

Mit der erfindungsgemäßen Vorrichtung kann der Sichtwinkel für eine Vielzahl von Volumenelementen, und zwar für jedes Volumenelement, das von den Lichtquellen beleuchtet wird, gleichzeitig bestimmt werden, ohne dass das transparente Objekt relativ zu der Beleuchtungseinrichtung und dem Target bewegt werden muss. Mit jeder Lichtquelle wird Sichtwinkel eines einzigen, aufgrund des optischen Wegs des Lichts zugehörigen Volumenelements erfasst, durch das das Licht der jeweiligen Lichtquelle hindurchtritt, wobei durch verschiedene Lichtquellen das Doppelbildverhalten unterschiedlicher Volumenelemente gleichzeitig ermittelt wird. Hierdurch wird die für die Qualitätskontrolle des transparenten Objekts erforderliche Zeit erheblich verkürzt. Hieraus kann dann auch der Doppelbildwinkel für jedes Volumenelement berechnet werden.

Die Positionen des Primär- und des Sekundärbildes der leuchtenden Lichtquelle werden auf dem Target bevorzugt 2-dimensional erfasst. Jede Position hat somit eine horizontale und eine vertikale Komponente. Das Target ist vorzugsweise senkrecht zur horizontalen Ebene des Lichtwegs von der Lichtquelle zum Target orientiert.

Zur Bestimmung des Sichtwinkels eines Volumenelements wird der Abstand der Position des Sekundärbildes von der Position des Primärbildes auf dem Target ermittelt. Der Sichtwinkel kann daraus mit Hilfe der bekannten Winkelfunktionen berechnet werden, da eine Länge des Lichtwegs von der Lichtquelle bis zum Target und die Position des transparenten Objekts im Lichtweg bekannt ist. Vorzugsweise kann die Feststellung genügen, ob der Abstand der Positionen von Primär- und Sekundarbild größer ist als ein vorgegebener Abstandsmaximalwert. Falls der Abstand größer ist als der Abstandsmaximalwert, wird das transparente Objekt als fehlerhaft eingestuft. Auf diese Weise kann der Aufwand bei der Bestimmung des Sichtwinkels reduziert werden.

In einem weiteren bevorzugten Ausführungsbeispiel werden zur gleichen Zeit die Positionen der Primärbilder und der Sekundärbilder einer Beleuchtungseinrichtung mit einer Reihe oder mehreren horizontal nebeneinander liegende Reihen einer Vielzahl übereinander (vertikal) angeordneter Lichtquellen durch die Kamera erfasst. Besonders bevorzugt werden dabei von einer Reihe von Lichtquellen gleichzeitig Volumenelemente über die gesamte Höhe des transparenten Objekts beleuchtet. Auf diese Weise werden in einem Schritt die Sichtwinkel für sich über die gesamte Höhe des transparenten Objekts erstreckenden Volumenelemente bestimmt. Für eine vollständige Analyse des transparenten Objekts wird dieses dann in einer horizontalen Richtung relativ zu der Beleuchtungseinrichtung und dem Target bewegt. Alternativ können zur gleichen Zeit die Positionen der Primärbilder und der Sekundärbilder einer Beleuchtungseinrichtung mit einer Reihe oder mehreren vertikal übereinander liegender Reihen von horizontal nebeneinander angeordneter Lichtquellen durch die Kamera erfasst werden, die gleichzeitig Volumenelemente über die gesamte Breite des transparenten Objekts beleuchten.

In einer Weiterbildung der Erfindung weist das Target mindestens zwei Kameras auf, die dazu eingerichtet sind, die Positionen des Primärbilds und des Sekundärbilds der gleichzeitig leuchtenden Lichtquellen zur gleichen Zeit zu erfassen. Dadurch lässt sich der Sichtwinkel für noch mehr Volumenelemente des transparenten Objekts gleichzeitig bestimmen. Durch die Verwendung mehrerer Kameras kann zudem gewährleistet werden, dass bezüglich jeder Lichtquelle die Beobachtungsrichtung im Wesentlichen senkrecht zur Spur des transparenten Objekts in einer horizontalen Ebene ist.

In einem bevorzugten Ausführungsbeispiel der erfindungsgemäßen Vorrichtung sind die Lichtquellen der Beleuchtungseinrichtung derart separat ein- und ausschaltbar, dass eine schrittweise Erfassung der Primär- und Sekundärbilder aller Lichtquellen erfolgt, wobei in jedem Schritt eine Teilmenge der Vielzahl der Lichtquellen gleichzeitig eingeschaltet und eine andere Teilmenge zur gleichen Zeit ausgeschaltet ist, wobei vorzugsweise zumindest bei einem Teil zweier benachbarter Lichtquellen eine Lichtquelle eingeschaltet und die andere Lichtquelle ausgeschaltet ist. So kann die Dichte der eingeschalteten Lichtquellen gesteuert und den Bedürfnissen angepasst werden. Durch die schrittweise Erfassung der Primär- und Sekundärbilder aller Lichtquellen kann die Genauigkeit und Zuverlässigkeit der Bestimmung des Sichtwinkels insbesondere für benachbarte Volumenelemente des transparenten Objekts erhöht werden. Folglich kann eine höhere Messpunktdichte erreicht werden.

Der Vorteil dieses Ausführungsbeispiels wird im Folgenden anhand zweier unmittelbar benachbarter Lichtquellen beschrieben. Ganz allgemein ist es erforderlich, um den Sichtwinkel richtig zu bestimmen, den auf dem Target entstehenden Lichtflecken einer einzigen Lichtquelle der gleichzeitig leuchtenden Lichtquellen zuzuordnen und festzustellen, ob es sich jeweils um ein Primärbild oder ein Sekundärbild der Lichtquelle handelt. Diese Zuordnung beziehungsweise Feststellung ist nicht immer eindeutig möglich und daher Ursache von Fehlern, obwohl Primär- und Sekundärbild durch ihre Intensität unterschieden werden können. Wenn in einem Schritt nur eine der benachbarten Lichtquellen und in einem zweiten Schritt die jeweils andere Lichtquelle eingeschaltet ist, kann die Zuordnung zu der Lichtquelle und die Feststellung der Art des Bildes verbessert sowie hierdurch die Genauigkeit der Bestimmung des Sichtwinkels erhöht werden.

In verschiedenen Ausführungsbeispielen können beispielsweise jede zweite, jede dritte oder jede vierte Lichtquelle einer Reihe nebeneinander angeordneter Lichtquellen in horizontaler Richtung und/oder vertikaler Richtung abwechselnd in zwei, drei oder vier Schritten nacheinander geschaltet werden.

Es ist weiter bevorzugt, wenn die Beleuchtungseinrichtung aus einer Vielzahl von vertikal verlaufenden Reihen von Lichtquellen zusammengesetzt ist, die in horizontaler Richtung nebeneinander angeordnet sind, wobei jeweils benachbarte Lichtquellen zweier benachbarter Reihen einen Abstand in horizontaler Richtung voneinander aufweisen. In vertikaler Richtung besitzen unmittelbar benachbarte Lichtquellen benachbarter Reihen ebenfalls einen Abstand (d. h. sie sind zueinander versetzt angeordnet), wobei sich der Abstand in vertikaler Richtung in einem besonders bevorzugten Ausführungsbeispiel von dem Abstand in horizontaler Richtung unterscheidet, da die horizontale Komponente des Sichtwinkels in der Regel kleiner ist als die jeweilige vertikale Komponente. Hierdurch können verschiedene Dichten von Lichtquellen für eine Beleuchtungseinrichtung realisiert werden, die zur Vermessung verschiedener transparenter Objekte geeignet sind.

In einem weiteren vorteilhaften Ausführungsbeispiel erfasst die Kamera lediglich die vertikale Komponente der Positionen des Primärbilds und des Sekundärbilds jeder Lichtquelle und die Auswerteeinrichtung zieht zur Bestimmung des Sichtwinkels lediglich die erfassten vertikalen Komponenten der Positionen heran. Insbesondere für Windschutzscheiben ist dies vorteilhaft. Ihr Neigungswinkel ist durch ihre vorgesehene Einbaulage in einem Fahrzeug bestimmt. Aufgrund ihrer gekrümmten Form und ihres Neigungswinkels verursachen Windschutzscheiben in der Regel in vertikaler Richtung größere Doppelbildwinkel und/oder Sichtwinkel als in horizontaler Richtung. Indem zur Bestimmung des Sichtwinkels lediglich die vertikale Komponente herangezogen wird, kann die Bestimmung vereinfacht und beschleunigt werden.

Bevorzugt sind unmittelbar benachbarte eingeschaltete Lichtquellen der Beleuchtungseinrichtung derart ansteuerbar, dass sie eine unterschiedliche Lichtstärke aufweisen, d.h. dass unmittelbar benachbarte Lichtquellen das transparente Objekt mit unterschiedlicher Lichtstärke (Helligkeit) beleuchten. Alternativ oder zusätzlich können unmittelbar benachbarte eingeschaltete Lichtquellen das transparente Objekt mit unterschiedlicher Farbe (Lichtfarbe) beleuchten. Mit einer derartigen Intensitätssteuerung ist eine besonders hohe Messpunktdichte auch während eines Schrittes möglich. Eine starke Lichtquelle leuchtet mit höherer Lichtstärke als eine benachbarte, schwache Lichtquelle und erzeugt deshalb jeweils ein intensitätsstärkeres Primär- und Sekundärbild als die schwache Lichtquelle. Anhand der unterschiedlichen Intensitäten können die Primär- und Sekundärbilder besser der jeweiligen Lichtquelle zugeordnet werden. In einem besonders bevorzugten Ausführungsbeispiel der Erfindung sind mehr als zwei benachbarte eingeschaltete Lichtquellen derart ansteuerbar, dass sie mehr als zwei unterschiedliche Stufen von Lichtstärken aufweisen. Damit kann die Messpunktdichte noch weiter erhöht werden.

Bevorzugt leuchten ein Teil der Lichtquellen mit einer ersten Farbe (Lichtfarbe) und ein anderer Teil der Lichtquellen mit einer zweiten, von der ersten Farbe verschiedenen Farbe (Lichtfarbe), wobei überaus bevorzugt zwei benachbarte Lichtquellen in unterschiedlichen Farben leuchten. Die Zuordnung der Primär- und Sekundärbilder anhand ihrer Farbwerte ermöglicht ebenfalls eine höhere Messpunktdichte. Hierbei wird angenommen, dass sich bei unterschiedlichen Lichtfarben die kontinuierlichen oder diskontinuierlichen Spektren der Lichtquellen signifikant, d.h. insbesondere in ihrem Maximum, unterscheiden.

In einem weiteren, vorteilhaften Ausführungsbeispiel der Erfindung ist im Lichtweg vor der mindestens einen Kamera ein optischer Filter angeordnet. Besonders bevorzugt handelt es sich um einen Farbfilter. Alternativ oder zusätzlich kann ein Polarisationsfilter vorgesehen sein. Durch den optischen Filter wird die Kamera gegenüber Umgebungslicht abgeschirmt, da die Kamera durch den Filter genau auf die zu erwartenden Intensitäten von Primär- und Sekundärbild abgestimmt wird.

Bevorzugt weisen die Lichtquellen eine Lichtquellendichte von mehr als 1/50 mm, bevorzugt mehr als 1/20 mm, besonders bevorzugt mehr als 1/5 mm auf. Dies erlaubt eine höhere Messgenauigkeit.

In einem bevorzugten Ausführungsbeispiel der Erfindung sind die Beleuchtungseinrichtung auf einer ersten Seite des transparenten Objekts und das Target (zum Beispiel der Bildsensor in der Kamera) auf einer der ersten Seite gegenüberliegenden zweiten Seite des transparenten Objekts angeordnet. Das transparente Objekt ist zwischen Beleuchtungseinrichtung und Kamera mit dem Target angeordnet. Ein vergleichsweise intensitätsreiches Primärbild ist die Folge. Die Intensität des Sekundärbildes ist deutlich geringer als die des Primärbildes. Folglich können die Primärbilder einer Vielzahl gleichzeitig leuchtender Lichtquellen anhand der Intensitäten sehr einfach, schnell und sicher von den Sekundärbildern unterschieden werden.

In einem besonders bevorzugten Ausführungsbeispiel ist im Lichtweg vor dem transparenten Objekt mindestens ein Spiegel angeordnet. Die Länge des Lichtwegs zwischen der Beleuchtungseinrichtung und dem transparenten Objekt beträgt beispielsweise 7 m, wie in der ECE-R43 angegeben. Durch den mindestens einen Spiegel wird das von der Beleuchtungseinrichtung kommende Licht reflektiert und umgelenkt, so dass der Lichtweg zwischen Beleuchtungseinrichtung und transparentem Objekt gefaltet ist. Mit dem mindestens einen Spiegel wird ein für den vorgesehenen Lichtweg erforderlicher Raumbedarf erheblich reduziert.

In einer Weiterbildung der Erfindung sind LEDs als Lichtquellen vorgesehen. Da LEDs vergleichsweise kleine Lichtquellen sind, können sie direkt als punktförmige Lichtquellen dienen. Zusätzliche Blenden sind nicht notwendig. Des Weiteren können LEDs sehr einfach separat angesteuert und geschaltet werden. Ein weiterer Vorteil ist, dass sie sehr nahe beieinander, also mit einer großen Dichte angeordnet werden können. Sie sind günstig, ihr Energieverbrauch ist gering und sie sind vergleichsweise robust, selbst bei wiederholten Schaltvorgängen. Dies senkt die Kosten und das Ausfallrisiko für den Betrieb der Beleuchtungseinrichtung. Außerdem erzeugen sie wenig Abwärme. Dies ist besonders bei einer hohen Dichte der Lichtquellen wichtig, um thermische Probleme der Beleuchtungseinrichtung im Betrieb zu vermeiden. Die LEDs können als Laserdioden ausgebildet sein.

Als punktförmige Lichtquellen sind auch Öffnungen einer ausgedehnten Beleuchtungseinrichtung zu verstehen, die durch Blenden realisiert werden und aus denen punktförmiges Licht in Richtung des transparenten Objekts austritt. Bevorzugt werden punktförmigen Öffnungen durch schaltbare Polarisationsfilter gebildet, besonders bevorzugt durch Flüssigkristallelemente, deren Transmissionsgrad für Licht separat gesteuert werden kann.

Jede punktförmige Lichtquelle der Beleuchtungseinrichtung kann in einem Ausführungsbeispiel analog zu der oben beschriebenen Ring-Loch-Platte der ECE-R43 einen zu dem Mittelpunkt der Lichtquelle konzentrischen, leuchtenden Ring aufweisen. Hierdurch kann punktweise gleichzeitig für mehrere Lichtquellen der Beleuchtungseinrichtung einfach geprüft werden, ob der Sekundärwinkel die Anforderung, innerhalb des Bildes des Rings zu liegen, erfüllt.

Bevorzugt ist als mindestens eine Kamera eine Matrixkamera vorgesehen, die aus Zeilen und Spalten aufgebaute, zweidimensionale Kamerabilder aufnimmt. Die Positionen der Primär- und Sekundärbilder werden so anhand ihrer Lage bezüglich der Zeilen und Spalten zweidimensional ortsaufgelöst erfasst. Besonders bevorzugt weist die mindestens eine Kamera einen in CCD- oder CMOS-Technik gefertigten Bildsensor auf. Solche Kameras erreichen eine hohe Auflösung und eine hohe Aufnahmegeschwindigkeit.

Die obige Aufgabe wird ferner gelöst durch ein Verfahren mit den Merkmalen des Anspruchs 7.

Bei dem erfindungsgemäßen Verfahren zur Bestimmung eines Sichtwinkels einer Lichtquelle an einem transparenten Objekt wird das transparente Objekt mittels einer Beleuchtungseinrichtung mit einer Vielzahl, zumindest teilweise gleichzeitig leuchtender punktförmiger Lichtquellen beleuchtet, wobei die Positionen eines Primärbilds und eines Sekundärbilds mehrerer gleichzeitig leuchtender Lichtquellen durch mindestens eine Kamera auf einem 2-dimensionalen Target zur gleichen Zeit erfasst werden, wobei das Primärbild und das Sekundärbild einer Lichtquelle durch das von der jeweiligen Lichtquelle beleuchtete Volumenelement des transparenten Objekts auf dem Target erzeugt werden, und wobei mittels einer Auswerteeinrichtung basierend auf den Positionen des Primärbilds und des Sekundärbilds der Sichtwinkel des jeweiligen Volumenelements des transparenten Objekts bestimmt wird.

In einem vorteilhaften Ausführungsbeispiel der Erfindung werden die Lichtquellen der Beleuchtungseinrichtung derart separat ein- und ausgeschaltet, dass eine schrittweise Erfassung der Primär- und Sekundärbilder aller Lichtquellen erfolgt, wobei in jedem Schritt eine Teilmenge der Vielzahl der Lichtquellen gleichzeitig eingeschaltet und eine andere Teilmenge zur gleichen Zeit ausgeschaltet wird, wobei vorzugsweise zumindest bei einem Teil zweier benachbarter Lichtquellen eine Lichtquelle eingeschaltet und die andere Lichtquelle ausgeschaltet wird.

Bevorzugt erfasst die Kamera lediglich die vertikalen Komponenten der Positionen des Primärbilds und des Sekundärbilds jeder Lichtquelle und die Auswerteeinrichtung zieht zur Bestimmung des Sichtwinkels lediglich die erfassten vertikalen Komponenten der Positionen heran.

In einem vorteilhaften Ausführungsbeispiel des erfindungsgemäßen Verfahrens werden benachbarte Lichtquellen der Beleuchtungseinrichtung derart angesteuert, dass sie eine unterschiedliche Helligkeit aufweisen. In weiteren Ausführungsbeispielen können verschiedene (beispielsweise benachbarte) Lichtquellen zusätzlich oder alternativ zu einer unterschiedlichen Helligkeit / Intensität unterschiedliche Farben (Wellenlängen) und/oder Polarisationen aufweisen.

Die genannten Vorgehensweisen und deren Vorteile wurden bereits oben im Hinblick auf die erfindungsgemäße Vorrichtung erläutert. Weitere zur Vorrichtung erklärten Verfahrensweisen, Variationen und Vorteile gelten entsprechend für das erfindungsgemäße Verfahren.

Bevorzugt wird das transparente Objekt während der Bestimmung des Sichtwinkels relativ zu der Beleuchtungseinrichtung und dem Target bewegt. So kann in mehreren aufeinander folgenden Schritten der Sichtwinkel jeweils für eine Vielzahl von Volumenelementen bestimmt werden, so dass eine schnelle und vollflächige Analyse des transparenten Objekts ermöglicht wird.

In einem vorteilhaften Ausführungsbeispiel wird für mindestens ein Volumenelement des transparenten Objekts basierend auf mindestens einem unter einem ersten Umgebungsparameter (d.h. unter einer ersten Konfiguration) durch Messung ermittelten ersten Sichtwinkel ein zweiter Sichtwinkel für einen von dem ersten Umgebungsparameter verschiedenen, zweiten Umgebungsparameter (d.h. für eine zweite Konfiguration) rechnerisch bestimmt. Für verschiedene Umgebungsparameter oder Konfigurationen, beispielsweise den Abstand des transparenten Objekts von dem Target (z.B. dem Bildsensor der Kamera, der Abstand wird im Folgenden auch als Sichtabstand bezeichnet), den Neigungswinkel des transparenten Objekts oder Einfallswinkel und/oder den Abstand der Beleuchtungseinrichtung von dem transparenten Objekt (Beleuchtungsabstand), kann sich der Sichtwinkel für dasselbe Volumenelement unterscheiden. Mit dem genannten Vorgehen ist ausgehend von der Messung des ersten Sichtwinkels unter dem ersten Umgebungsparameter (d.h. in der ersten Konfiguration) keine zusätzliche Messung des zweiten Sichtwinkels erforderlich. Stattdessen kann der Sichtwinkel zu dem zweiten Umgebungsparameter (d.h. zu der zweiten Konfiguration) berechnet werden.

Das erfindungsgemäße Verfahren sowie die erfindungsgemäße Vorrichtung haben jeweils den Vorteil, dass sie den aus einer Biegung oder Krümmung des transparenten Objekts und den aus der eventuell vorhandenen Keilform des transparenten Objekts resultierenden Anteil des gemessenen Sichtwinkels in dem jeweiligen Volumenelement extrahieren und trennen können. Hierdurch kann beispielsweise die Fehleranalyse erleichtert werden.

In einem weiteren Ausführungsbeispiel des Verfahrens wird ein durch einen Biegeradius und eine Dicke des transparenten Objekts im jeweiligen Volumenelement hervorgerufener Sichtwinkelanteil des Sichtwinkels bestimmt. Die Ermittlung dieses durch Krümmung des transparenten Objekts entstehenden Anteils erfolgt auf der Grundlage, dass der Biegeradius und die Dicke des transparenten Objekts in dem jeweiligen Volumenelement bekannt sind. Dies ist häufig durch das Design des transparenten Objekts vorgegeben. Die Ermittlung kann beispielsweise auch an einem entsprechenden Volumenelement einer vergleichbaren Referenzscheibe, die keinen zusätzlichen Keil aufweist, durchgeführt werden. Durch dieses Vorgehen wird der durch die Dicke und den Biegeradius bedingte Sichtwinkelanteil bestimmt.

Entsprechend wird in einem weiteren Ausführungsbeispiel des erfindungsgemäßen Verfahrens ein durch einen Keilwinkel im jeweiligen Volumenelement des transparenten Objekts hervorgerufener Sichtwinkelanteil des Sichtwinkels bestimmt. Vorzugsweise kann auch der Keilwinkel des Keilwinkelelements ermittelt werden. Hierbei weist ein Volumenelement einen Keilwinkel auf, wenn seine Vorder- und Rückseite nicht parallel verlaufen. Hierdurch können unerwünschte Keilwinkel identifiziert und deren Größe und Verteilung über das transparente Objekt als Qualitätskriterium für das untersuchte transparente Objekt herangezogen werden.

Der ermittelte Keilwinkel kann ferner dazu verwendet werden, um unter einem anderen Umgebungsparameter den zugehörigen zweiten Sichtwinkel des jeweiligen Volumenelements zu bestimmen. Daher umfasst die Bestimmung des zweiten Sichtwinkels in diesem Ausführungsbeispiel die folgenden Schritte:

- Berechnung eines Keilwinkels des Volumenelements basierend auf dem ermittelten ersten Sichtwinkel und
- Berechnung des zweiten Sichtwinkels unter Verwendung des berechneten Keilwinkels.

Die Trennung der Anteile des messtechnisch ermittelten Sichtwinkels basierend auf dem Biegeradius und der Dicke beziehungsweise basierend auf dem Keilwinkel kann insbesondere dafür eingesetzt werden, den zweiten Sichtwinkel bei einem zweiten Umgebungsparameter mit großer Genauigkeit zu bestimmen. Die Anteile werden unabhängig voneinander für den zweiten Umgebungsparameter berechnet. Das vereinfacht die Berechnung des zweiten Sichtwinkels.

In einem weiteren bevorzugten Ausführungsbeispiel wird für mindestens ein Volumenelement des transparenten Körpers basierend auf dem durch Messung der Positionen von Primär- und Sekundärbild ermittelten Sichtwinkel der Doppelbildwinkel bestimmt. Besonders bevorzugt wird der Doppelbildwinkel anhand des Keilwinkels und eines Einfallswinkels berechnet, wobei der Keilwinkel und der Einfallswinkel aus dem Sichtwinkel ermittelt werden. Der Doppelbildwinkel kann dadurch schnell und ohne zusätzliche Messung bestimmt werden.

Erfindungsgemäß kann die Bestimmung einzelner Sichtwinkel sehr schnell stattfinden, insbesondere schnell im Vergleich zu einer Geschwindigkeit einer relativen Bewegung des transparenten Objekts gegenüber der Beleuchtungseinrichtung und dem Target. Beispielsweise benötigt die

Erfassung der Positionen eines Primärbilds und eines Sekundärbilds mehrerer gleichzeitig leuchtender Lichtquellen weniger als eine Millisekunde. Bei der Produktion von Windschutzscheiben liegt der Vorschub heute bei etwa 40 Metern pro Minute. Innerhalb einer Millisekunde wird eine Schreibe somit um ungefähr 0,7 mm weiterbewegt. Folglich wird die Bestimmung einzelner Sichtwinkel durch die gleichzeitig stattfindende relative Bewegung nicht beeinträchtigt. Dies erleichtert den Ablauf und die Steuerung der vollflächigen Analyse des transparenten Objekts.

Erfindungsgemäß ist die Auswerteeinrichtung der Vorrichtung zur Bestimmung eines Sichtwinkels dazu eingerichtet, die obigen Verfahrensschritte und insbesondere die oben beschriebenen Berechnungen durchzuführen. Hierfür weist die Auswerteeinrichtung mit Prozessor die entsprechende Software sowie Hardware einschließlich Speicher und Bussystem auf.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:

Fig. 1 ein erstes Ausführungsbeispiel der erfindungsgemäßen Vorrichtung zur Bestimmung eines Sichtwinkels einer Lichtquelle an einem transparenten Objekt in Form einer Windschutzscheibe in einem Längsschnitt,

Fig. 2, 2a die Entstehung eines Sichtwinkels (Fig. 2) durch ein einziges, beleuchtetes Volumenelement eines transparenten Objekts beziehungsweise eines Doppelbildwinkels (Fig. 2a) durch das transparente Objekt im Querschnitt,

Fig. 3 die Positionen eines Primärbildes und ein Sekundärbildes einer einzigen Lichtquelle auf einem Target in einer Ansicht von vorn,

Fig. 4 Intensitäten der Primär- und Sekundärbilder sechs vertikal übereinander angeordneter Lichtquellen aus Fig. 1, wenn benachbarte Lichtquellen eine unterschiedliche Lichtstärke aufweisen,

Fig. 5 ein zweites Ausführungsbeispiel der erfindungsgemäßen Vorrichtung in einem Längsschnitt,

Fig. 6 eine Beleuchtungseinrichtung in einer Ansicht von vorn,

Fig. 7 die Erzeugung eines Sichtwinkels durch ein einziges keilförmiges beleuchtetes Volumenelement eines transparenten Objekts im Querschnitt,

Fig. 8 die Erzeugung eines Sichtwinkels analog zu Fig. 7 unter einem zweiten Umgebungsparameter,

Fig. 9 - 11 die Erzeugung eines Sichtwinkels durch ein einziges gebogenes beleuchtetes Volumenelement eines transparenten Objekts in einem Querschnitt und

Fig. 12 ein drittes Ausführungsbeispiel der erfindungsgemäßen Vorrichtung zur Bestimmung eines Sichtwinkels einer Lichtquelle an einem transparenten Objekt in Form einer Windschutzscheibe in einem Längsschnitt.

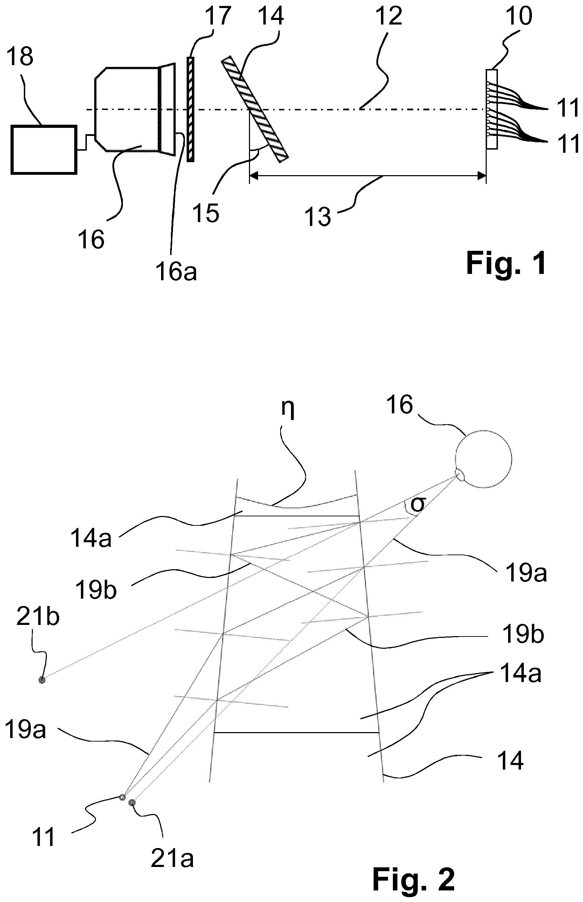

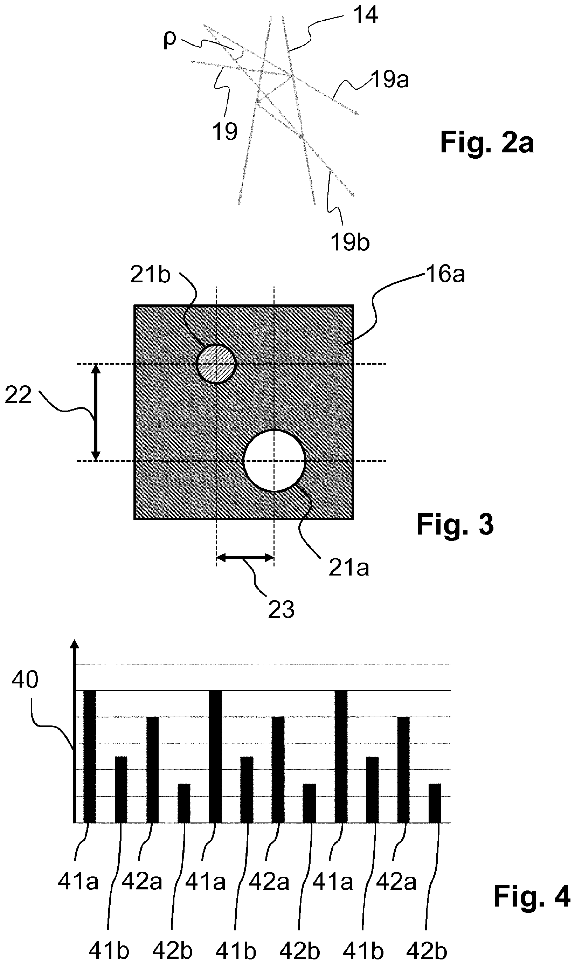

Das in Fig. 1 dargestellte erste Ausführungsbeispiel einer erfindungsgemäßen Vorrichtung weist eine Beleuchtungseinrichtung 10 mit beispielsweise neun gleichzeitig leuchtenden, punktförmigen und vertikal übereinander in einer Reihe angeordneten Lichtquellen 11 auf, die z.B. als LEDs ausgeführt sind. Die Beleuchtungseinrichtung 10 ist auf einer ersten Seite eines transparenten Objekts in Form einer Windschutzscheibe (im Folgenden kurz Scheibe) 14 angeordnet. Auf einer der ersten Seite gegenüber liegenden zweiten Seite der Scheibe 14 ist eine Kamera 16 vorgesehen. Die Scheibe 14 ist in einer horizontalen Richtung 12 in einem Abstand 13 von beispielsweise 7 m von der Beleuchtungseinrichtung 10 entfernt und mit einem Neigungswinkel 15 gegenüber einer vertikalen Richtung, wobei der Neigungswinkel vorzugsweise der späteren Einbaulage der Scheibe 14 entspricht, geneigt angeordnet. Jede Lichtquelle 11 emittiert Licht in Richtung der Scheibe 14 und beleuchtet dabei jeweils ein Volumenelement 14a der Scheibe 14. Das Target wird durch die Aufnahmefläche 16a der Kamera 16 gebildet. Die Kamera 16 erfasst die Positionen eines Primärbildes 21a und eines Sekundärbildes 21b (siehe Fig. 3) für jede der leuchtenden Lichtquellen 11 gleichzeitig. Im Lichtweg vor der Kamera 16 kann ein optischer Filter 17 angeordnet sein, der nur für eine Wellenlänge durchlässig, mit der die Lichtquellen 11 leuchten. Störendes Licht von anderen Quellen mit anderen Wellenlängen wird in diesem Fall nicht von der Kamera 16 erfasst. Eine mit der Kamera 16 verbundene Auswerteeinrichtung 18 bestimmt die Sichtwinkel der beleuchteten Volumenelemente 14a der Scheibe 14 anhand der Positionen des jeweils zugehörigen Primär- und Sekundärbilds 21a, 21b, wie nachfolgend beschrieben wird, gleichzeitig für alle von der Beleuchtungseinrichtung 10 beleuchteten Volumenelemente 14a.

Alternativ kann die Beleuchtungseinrichtung 10 in Fig. 1 zwölf vertikal, jeweils untereinander angeordnete Lichtquellen 11 (beispielsweise mit einem Abstand von 4,5 mm) aufweisen, wobei die Lichtquellen separat an- und ausschaltbar sind. Zur Erklärung bezüglich eines beispielhaften Schaltmusters ist der Zustand jeder Lichtquelle mit "1" für eingeschaltet und "0" für ausgeschaltet gekennzeichnet. In einem ersten Schritt ist von oben nach unten gesehen jede vierte Lichtquelle 11 angeschaltet (erstes Schaltmuster: 100010001000). In einem zweiten Schritt werden die im ersten Schritt angeschalteten Lichtquellen ausgeschaltet und die jeweils darunter liegenden eingeschaltet (zweites Schaltmuster: 010001000100). Analog folgen ein dritter Schritt mit einem Schaltzustand, der einem dritten Schaltmuster 001000100010 entspricht, und ein vierter Schritt mit einem Schaltzustand, der einem vierten Schaltmuster 000100010001 entspricht. Damit kann in den insgesamt vier Schritten mit allen Lichtquellen 11 der Beleuchtungseinrichtung 10 der Sichtwinkel jeweils für ein einzelnes Volumenelement bestimmt werden, ohne dass für benachbarte Lichtquellen 11 aufgrund der hohen Lichtquellendichte Schwierigkeiten bei der Zuordnung der Primär- und Sekundärbilder 21a, 21b (siehe Fig. 2) auftreten.

Beleuchtungseinrichtungen 10 mit einer anderen Anzahl und/oder Verteilung der Lichtquellen 11 sind ebenfalls denkbar.

Fig. 2 zeigt ein einziges Volumenelement 14a der Scheibe 14 aus Fig. 1, welches von einer einzigen Lichtquellen 11 aus Fig. 1 beleuchtet wird. Ein Lichtstrahl von der Lichtquelle 11 trifft unter einem Einfallswinkel $\kappa$ gegenüber der Oberflächennormalen auf das beleuchtete Volumenelement 14a. Ein Teil des Lichts von der Lichtquelle 11 folgt einem primären Lichtweg 19a und durchquert das Volumenelement 14a, ohne darin reflektiert zu werden. Ein anderer Teil des Lichts von der Lichtquelle 11 folgt einem sekundären Lichtweg 19b und durchquert das Volumenelement 14a unter Reflexion an der zweiten Grenzfläche der Scheibe 14. Auf der zweiten Seite des Volumenelements 14a, welche der zweiten Seite der Scheibe 14 aus Fig. 1 entspricht, verlaufen der primäre Lichtweg 19a und der sekundäre Lichtweg 19b unter einem Sichtwinkel $\sigma$ zueinander. Bei der Scheibe 14 handelt es sich um eine flache, d.h. nicht gekrümmte Scheibe mit einem Keil. Dies bedeutet, dass die Vorderseite und die Rückseite der Scheibe 14 im Bereich des beleuchteten Volumenelements 14a nicht parallel zueinander verlaufen sondern unter einem Keilwinkel $\eta$.

Die Figur 2a stellt die Entstehung des Doppelbildwinkels $\rho$ durch den primären Lichtweg 19a und den sekundären Lichtweg 19b eines einfallenden Strahls 19 durch die Scheibe 14 dar. Für den Doppelbildwinkel $\rho$ ergibt sich:

$$\rho = 2\,\eta\left(\frac{\sqrt{n^2 - \sin^2\kappa}}{\cos\kappa}\right) \tag{F1}$$

Dabei ist n der Brechungsindex des Materials der Scheibe 14, $\kappa$ der Einfallswinkel des einfallenden Strahls 19 und $\eta$ der Keilwinkel der Scheibe 14.

In Fig. 3 ist ein Abschnitt des Targets 16a der Kamera 16 aus Fig. 1 schematisch dargestellt. Es sind beispielhaft die Positionen eines Primärbilds 21a und eines Sekundärbilds 21b einer einzigen Lichtquelle 11 gezeigt. Anhand eines vertikalen Abstands 22 und eines horizontalen Abstandes 23 der Positionen des Primärbildes 21a und des Sekundärbildes 21b auf dem Target 16a kann die Auswerteeinrichtung 18 in Fig. 1 den Sichtwinkel $\sigma$ für das von der Lichtquelle 11 beleuchtete Volumenelement 14a der Scheibe 14 aus Fig. 1 bestimmen. Alternativ können auch die absoluten horizontalen und vertikalen Positionen des Primärbilds 21a und des Sekundärbilds 21b in einem 2-dimensionalen Koordinatensystem des Targets 16a bestimmt werden. Eine Länge des Lichtwegs von der Lichtquelle 11 bis zum Target 16a ist bekannt. Der vertikale Abstand 22 wird aus der durch die Kamera 16 bestimmte vertikale Pixelzahl Pv ermittelt. Mithilfe eines Proportionalitätsfaktors Fv, der in vertikaler Richtung einen Pixelabstand und einen Abbildungsmaßstab der Kamera 16 beinhaltet, wird unter Berücksichtigung des Abstandes E zwischen Target 16a und Scheibe eine vertikale Komponente $\rho v$ = arctan(Pv*Fv/E) des Doppelbildwinkels $\rho$ bestimmt. Für die Berechnung einer horizontalen Komponente des Doppelbildwinkels ph wird ausgehend von einer horizontalen Pixelzahl Ph analog vorgegangen. Analog werden für jede weitere Lichtquelle 11 ebenfalls ein Primär- und Sekundärbild erfasst und der Doppelbildwinkel mit seinen beiden Komponenten pv und ph bestimmt. Analog kann hinsichtlich des Sichtwinkels $\sigma$ vorgegangen werden.

Fig. 4 stellt in einem Diagramm beispielhaft die Intensitäten der Primär- und Sekundärbilder von sechs nebeneinander angeordneten Lichtquellen 11 aus Fig. 1 auf dem Target dar, wobei zwei benachbarte Lichtquellen 11 jeweils eine unterschiedliche Lichtstärke aufweisen. Auf der Ordinate 40 ist die Intensität aufgetragen. Die Lichtquellen 11 mit einer höheren Lichtstärke erzeugen Primärbilder mit einer hohen Primärbildintensität 41a und die die Lichtquellen 11 mit einer geringeren Lichtstärke erzeugen Primärbilder mit einer geringeren Primärbildintensität 42a. Entsprechend weisen auch die Sekundärbilder der Lichtquellen 11 mit einer höheren Lichtstärke eine höhere Sekundärbildintensität 41b auf als die Lichtquellen 11 mit einer geringeren Lichtstärke. Anhand der unterschiedlichen Intensitäten können die Primär- und Sekundärbilder einander zugeordnet werden.

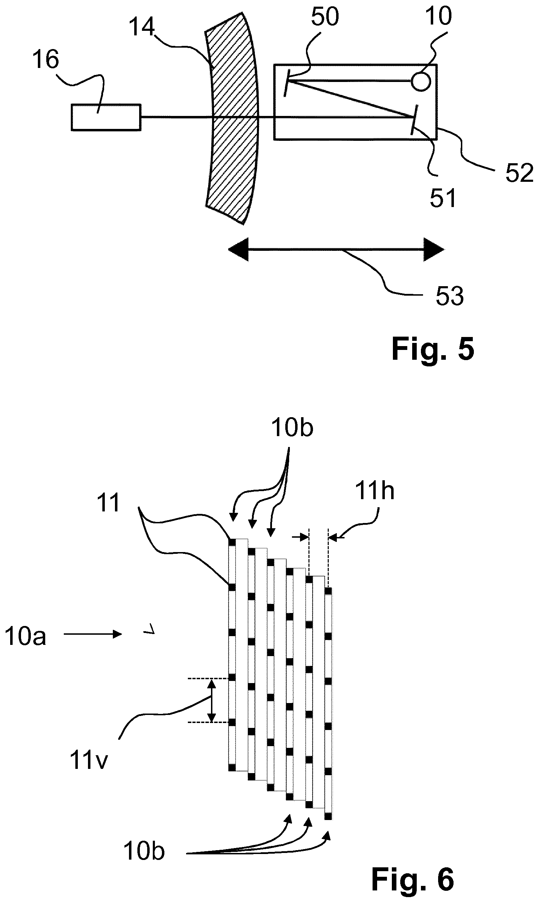

Fig. 5 zeigt ein zweites Ausführungsbeispiel der erfindungsgemäßen Vorrichtung. Im Lichtweg zwischen der Beleuchtungseinrichtung 10 und der Scheibe 14 sind abweichend von dem in Fig. 1 gezeigten ersten Ausführungsbeispiel ein erster Spiegel 50 und ein zweiter Spiegel 51 vorgesehen. Die Beleuchtungseinrichtung 10, der erste Spiegel 50 und der zweite Spiegel 51 sind gemeinsam in einem Gehäuse 52 angeordnet. Durch den ersten Spiegel 50 und den zweiten Spiegel 51 wird der Lichtweg zwischen der Beleuchtungseinrichtung 10 und dem transparenten Objekt 14 zweimal gefaltet. Der auf einer Vorderseite der Scheibe 14 erforderliche Raumbedarf 53 für die Vorrichtung kann dadurch erheblich reduziert werden. Durch die zweifache Faltung kann auch mit einem Raumbedarf 53 von nur 2,5 m ein Lichtweg von mehr als 7 m Länge zwischen der Beleuchtungseinrichtung 10 und Scheibe 14 realisiert werden.

In Fig. 6 ist eine weitere Realisierungsmöglichkeit für eine Beleuchtungseinrichtung 10a gezeigt. Sie weist mehrere horizontal nebeneinander angeordnete Lichtleisten 10b auf, wobei jede Lichtleiste 10b mehrere vertikal übereinander angeordnete Lichtquellen 11 mit einem gleichmäßigen Lichtquellenabstand 11v hat. Der vertikale Lichtquellenabstand 11v ist bei diesem Ausführungsbeispiel größer als ein horizontaler Lichtquellenabstand 11h, der dem Abstand zweier benachbarter Lichtleisten 10b entspricht. Zwei benachbarte, also nebeneinander oder untereinander angeordnete Lichtquellen 11, leuchten vorzugsweise jeweils in unterschiedlichen Farben und/oder Intensitäten und/oder Polarisationen. Zwei nebeneinander liegende Lichtleisten 10b sind in vertikaler Richtung jeweils um einen Abstand, der kleiner als der vertikale Lichtquellenabstand 11v ist, verschoben, um in vertikaler Richtung eine höhere Lichtquellendichte zu erzielen. Aufgrund des horizontalen Abstands der Lichtleisten 10b eignet sich die Beleuchtungseinrichtung 10a aus Fig. 6 auch für die Bestimmung der horizontalen Komponente des Doppelbildwinkels.

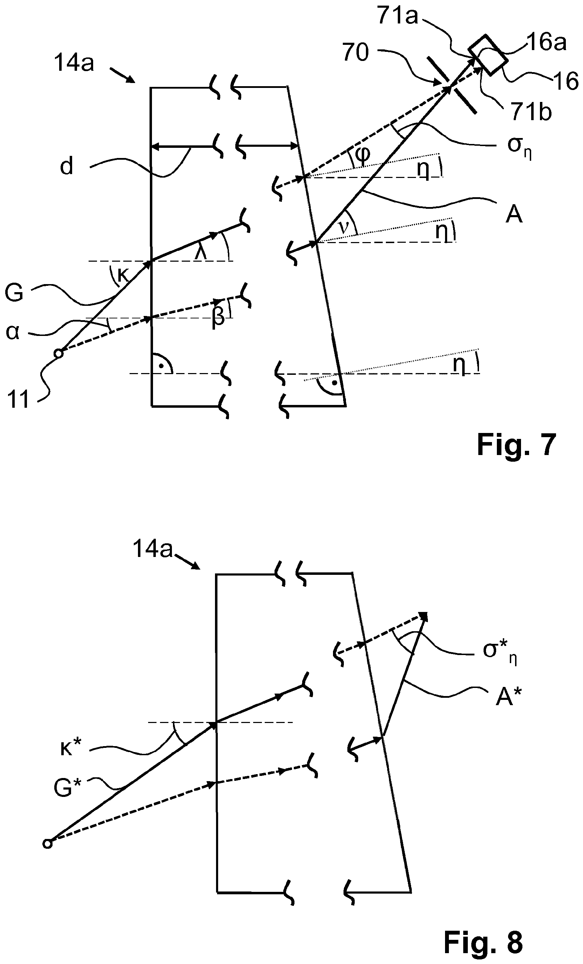

Anhand Fig. 7 wird die Entstehung eines Sichtwinkels an einem keilförmigen Volumenelement 14a aus einem Primärbild 71a und einem Sekundärbild 71b der Lichtquelle 11 auf dem Target 16a erläutert. Auf einem primären Lichtweg trifft Licht im Beleuchtungsabstand G von der Lichtquelle 11 unter einem Einfallswinkel $\kappa$ auf eine Vorderseite des Volumenelements 14a, wird aufgrund des Brechungsindex n des Volumenelements 14a gebrochen, so dass es in einem Winkel $\lambda$ zu der Normalen auf der Vorderseite des Volumenelements 14a durch das Volumenelement 14a hindurchgeht. Dann tritt es auf der Rückseite unter einem Ausfallswinkel $v$ gegenüber einer Normalen auf der Rückseite aus, passiert in einem Sichtabstand A eine Apertur 70 und erzeugt auf dem Target 16a das Primärbild 71a. Auf einem sekundären Lichtweg (gestrichelt gezeichnet) trifft Licht von derselben Lichtquelle 11 unter einem anderen Einfallswinkel $\alpha$ auf die Vorderseite, wird zu einem Winkel $\beta$ gebrochen, zweimal im Volumenelement 14a reflektiert und tritt danach auf dessen Rückseite unter einem Ausfallwinkel $\varphi$ aus. Anschließend passiert es die Apertur 70 und erzeugt auf dem Target 16a ein Sekundärbild 71b. Auf der zweiten Seite des Volumenelements 14a, also zwischen seiner Rückseite und dem Target 16a, verlaufen der primäre und der sekundäre Lichtweg unter einem Sichtwinkel $\sigma_\eta$.

Als Näherung wird angenommen, dass die Dicke des Volumenelements 14a trotz des Keilwinkels $\eta$ konstant ist. Zudem wird vorausgesetzt, dass $\sigma$ und $\eta$ kleine Winkel sind. Damit sowohl der primäre Lichtweg als auch der sekundäre Lichtweg durch die Apertur 70 verlaufen, gelten folgende Gleichungen allgemein für ein keilförmiges transparentes Objekt:

$$\sin \vartheta = \sin \kappa - \eta \sqrt{n^2 - \sin^2 \kappa} \qquad (F2)$$

$$\sin \varphi = \sin \alpha - 3\eta \sqrt{n^2 - \sin^2 \alpha} \qquad (F3)$$

$$G \cos \kappa \left(tg\, \alpha - tg\, \kappa\right) + d\left[2\, tg\left(\beta - 2\eta\right) + tg\, \beta - tg\, \lambda\right] \\ - A \cos(\vartheta + \eta)\left[tg(\vartheta + \eta) - tg(\varphi + \eta)\right] = 0 \qquad (F4)$$

$$\sigma_\eta = v - \varphi \qquad (F5)$$

Der Sichtwinkel $\sigma_\eta$ desselben Volumenelements 14a kann für verschiedene Umgebungsparameter oder Konfigurationen (Beleuchtungsabstand G, Sichtabstand A, Einfallswinkel $\kappa$) unterschiedlich sein.

Stattdessen werden hier die Sichtwinkel $\sigma_\eta$ für verschiedene Volumenelemente 14a jeweils unter ersten Umgebungsparametern (d.h. für eine erste Konfiguration), die von den Referenzparametern abweichen, bestimmt und daraus die unter Referenzparametern (Referenz-Sichtabstand A\*, Referenz-Beleuchtungsabstand G\*, Referenz-Einfallswinkel $\kappa$\*) vorliegenden Sichtwinkel $\sigma_\eta$\* berechnet (vgl. Fig. 7 und 8). Hierdurch kann beispielsweise bei anderen Parametern (d.h. bei einer von der Norm abweichenden Konfiguration), z.B. einem Sichtabstand von 4 m, der Sichtwinkel bestimmt und hieraus der Sichtwinkel und den von der Norm geforderten Wert des Doppelbildwinkels bei einem Referenz-Sichtabstand von 7 m berechnet werden. Es kann folglich der Sichtwinkel und der Doppelbildwinkel für die Referenz- oder Normkonfiguration berechnet werden.

Die Berechnung des Sichtwinkels erfolgt beispielsweise auf der Grundlage, dass der Beleuchtungsabstand G, der Einfallswinkel $\kappa$, die Dicke d, der Keilwinkel $\eta$ und der Sichtabstand A bekannt sind sowie der Sichtwinkel $\sigma_\eta$ gemessen ist. Nun wird in dem Gleichungssystem mit den Formeln (F2) bis (F5) der Einfallswinkel $\alpha$ variiert und das Gleichungssystem mit einem Iterationsverfahren (beispielsweise MS Solver) gelöst.

Alternativ kann, wenn der Beleuchtungsabstand G, der Einfallswinkel $\alpha$, der Einfallswinkel $\kappa$, die Dicke d und der Sichtabstand A sowie der Sichtwinkel $\sigma_\eta$ bekannt sind, der Keilwinkel $\eta$ anhand des Gleichungssystems mit den Formeln (F2) bis (F5) des untersuchten Volumenelements gefunden werden. Einen Startwert oder Näherungswert des Keilwinkels $\eta$ erhält man nach Umstellen von Formel (F1), wenn anstelle des Doppelbildwinkels $\rho$ der gemessene Sichtwinkel $\sigma_\eta$ eingesetzt wird. Davon ausgehend wird der Keilwinkel $\eta$ variiert, bis der gemessene Sichtwinkel $\sigma_\eta$ in Formel (F5) reproduziert wird. Mit dem Keilwinkel $\eta$ lässt sich durch erneutes Lösen des obigen Gleichungssystems ein Sichtwinkel $\sigma_\eta$\*für einen zweiten Umgebungsparameter bestimmen. Des Weiteren kann aus dem Keilwinkel $\eta$ und dem Einfallswinkel $\kappa$ anhand der Formel (F1) der zugehörige (von A und G unabhängige) Doppelbildwinkel $\rho$ für das Volumenelement 14a berechnet werden.

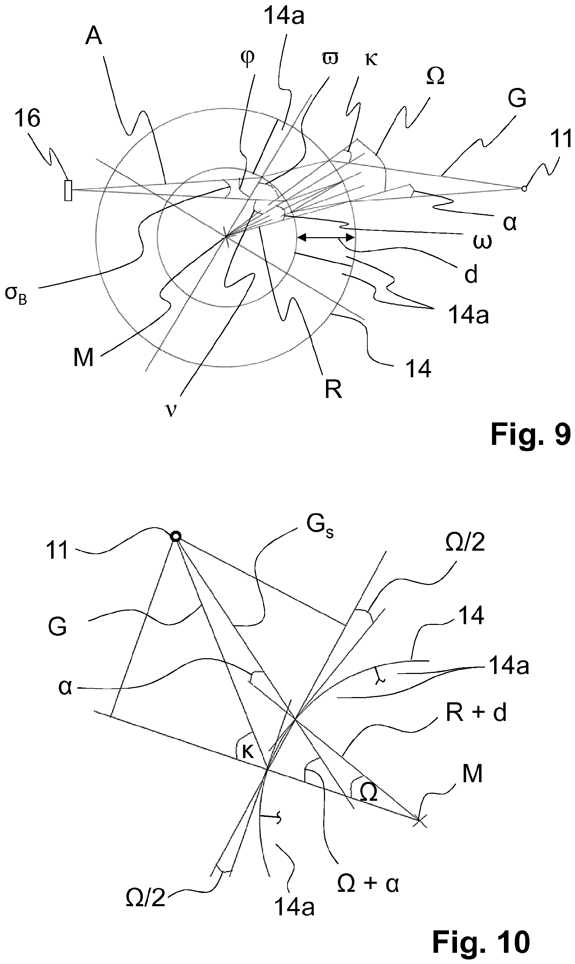

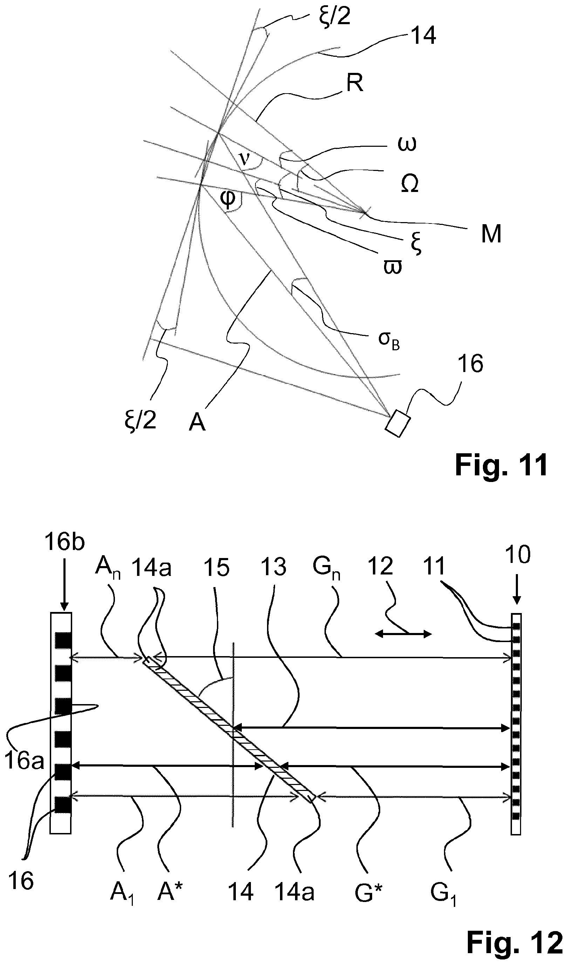

Da das Gleichungssystem vier Gleichungen aufweist, können in vielen Fällen durch bekannte numerische Verfahren auch Lösungen für mehrere Unbekannte, insbesondere für den Keilwinkel $\eta$ und den Einfallswinkel $\alpha$, gefunden werden. Die Fig. 9 bis 11 veranschaulichen ein gebogenes transparentes Objekt (Scheibe) 14 ohne Keil (d.h. $\eta$ = 0), bei dem ein Sichtwinkel $\sigma_B$ des Volumenelements 14a durch den Biegeradius R verursacht wird. Zur besseren Übersichtlichkeit sind in Fig. 10 der primäre Lichtweg und der sekundäre Lichtweg lediglich bis zu der Vorderseite des Volumenelements 14a sowie in Fig. 11 lediglich von der Rückseite des Volumenelements 14a bis zum Target 16a gezeigt. Im Bereich des Volumenelements 14a besitzt die Scheibe 14 auf der Rückseite einen Biegeradius R und auf der Vorderseite einen Biegeradius R + d, wobei d eine Dicke der Scheibe im Bereich des Volumenelements 14a ist. Der Biegeradius R und die Dicke d sind - im Gegensatz zu eventuell vorliegenden Keilwinkeln - in den meisten Fällen bekannt. Auf dem primären Lichtweg trifft das Licht von der Lichtquelle 11 im Beleuchtungsabstand G unter dem Einfallswinkel $\kappa$ auf die Vorderseite des Volumenelements 14a, auf dem sekundären Lichtweg im Beleuchtungsabstand $G_S$ unter einem Einfallswinkel $\alpha$. Bezüglich eines Krümmungsmittelpunkts M des Volumenelements 14a sind die Auftreffpunkte des Lichts des primären und des sekundären Lichtwegs auf der Vorderseite um einen Winkel $\Omega$ versetzt.

Das Licht des primären Lichtwegs geht nur einmal durch das Volumenelement 14a hindurch und verlässt es an dessen Rückseite unter einem Ausfallswinkel $\varphi$. Das Licht des sekundären Lichtwegs hingegen wird erst an der Rückseite, dann an der Vorderseite des Volumenelements 14a reflektiert und verlässt es erst danach an der Rückseite unter einem Ausfallswinkel v. Wie in Fig. 11 zu erkennen ist, sind die Austrittspunkte des primären Lichtwegs und des sekundären Lichtwegs auf der Rückseite bezüglich des Krümmungsmittelpunktes M um einen Winkel $\xi$ versetzt. Das Licht des primären Lichtwegs trifft von der Rückseite des Volumenelements 14a kommend im Sichtabstand A auf das Target 16. Das Licht des sekundären Lichtwegs trifft ebenfalls von der Rückseite kommend auf das Target 16a. Dabei verlaufen der primäre Lichtweg und der zweite Lichtweg nach dem Verlassen des Volumenelements 14a unter einem Sichtwinkel $\sigma_B$, der insbesondere durch den Krümmungs- oder Biegeradius R des Volumenelements und die Dicke d des Volumenelements bestimmt wird.

Für die in den Fig. 9 bis 11 gezeigte Situation ergibt sich folgendes Gleichungssystem:

$$\sin \varphi = \frac{R + d}{R} \sin \kappa \qquad (F6)$$

$$\sin v = \frac{R + d}{R} \sin \alpha \qquad (F7)$$

$$\Omega = \frac{G \sin (\kappa - \alpha)}{(R + d) \cos \alpha + G \cos (\kappa - \alpha)} \qquad (F8)$$

$$\omega = \frac{3\,d}{R}\,\frac{\sin\alpha}{\sqrt{n^2 - \sin^2\alpha}} \qquad (F9)$$

$$\varpi = \frac{d}{R}\,\frac{\sin\kappa}{\sqrt{n^2 - \sin^2\kappa}} \qquad (F10)$$

$$\xi = \Omega - \omega + \varpi \qquad (F11)$$

$$\sigma_B = \nu - \varphi + \xi \qquad (F12)$$

$$G \cos\left(\kappa - \frac{\Omega}{2}\right) \sin\frac{\xi}{2}\left[\tan\left(\kappa - \frac{\Omega}{2}\right) - \tan\left(\alpha + \frac{\Omega}{2}\right)\right] - 2\,d \sin\frac{\Omega}{2}\sin\frac{\xi}{2}$$
$$= A \cos\left(\varphi - \frac{\xi}{2}\right)\sin\frac{\Omega}{2}\left[\tan\left(\nu + \frac{\xi}{2}\right) - \tan\left(\varphi - \frac{\xi}{2}\right)\right] \qquad (F13)$$

Insbesondere bei bekannter Messanordnung und Abwesenheit eines Keilfehlers ($\eta = 0$) in einem Volumenelement 14a kann der Biegeradius R basierend auf dem gemessenen Sichtwinkel $\sigma_B$ bestimmt werden. Dazu wird das oben stehende Gleichungssystem mit den Formeln (F6) bis (F13) durch bekannte numerische Lösungsverfahren unter Variation von $\alpha$ gelöst.

Auch der durch die Biegeradius R hervorgerufene Sichtwinkel $\sigma_B$ hängt im Allgemeinen von den Umgebungsparametern ab. Insbesondere bei bekanntem Radius R kann durch Lösung des oben stehenden Gleichungssystems ein unter einem zweiten Umgebungsparameter vorliegender Sichtwinkel $\sigma_B^*$ berechnet werden, beispielsweise bei einem gewünschten Sichtabstand A.

Die oben beschriebenen Verfahren werden für jedes Volumenelement 14a der Vielzahl der durch die Beleuchtungseinrichtung beleuchteten Volumenelemente separat und gleichzeitig durchgeführt. Hierdurch kann der Sichtwinkel für alle Volumenelemente 14a eines großen Bereichs der Scheibe 14, gegebenenfalls der gesamten Scheibe 14, gleichzeitig ermittelt werden.

Das in Fig. 12 dargestellte dritte Ausführungsbeispiel einer erfindungsgemäßen Vorrichtung unterscheidet sich von der in Fig. 1 gezeigten Vorrichtung dadurch, dass das Target 16a aus den Aufnahmeflächen/Bildsensoren mehrerer Kameras 16 gebildet wird, die in einer Kamerazeile 16b angeordnet sind. Die Beleuchtungseinrichtung 10 ist als LED-Leiste mit übereinander angeordneten Lichtquellen 11 ausgeführt. Wie in Fig. 1 ist die flache Scheibe 14 um den Neigungswinkel 15 geneigt und in der horizontalen Richtung 12 in einem Abstand 13 von der Beleuchtungseinrichtung 10 entfernt angeordnet. Wegen des Neigungswinkels 15 haben die einzelnen Lichtquellen 11 der Beleuchtungseinrichtung 10 unterschiedliche horizontale Beleuchtungsabstände G. Dabei ist ein Beleuchtungsabstand $G_1$ zwischen einer untersten Lichtquelle 11 und einem untersten Volumenelement 14a geringer als ein Beleuchtungsabstand $G_n$ zwischen einer obersten Lichtquelle 11 und einem obersten Volumenelement 14a und geringer als der Abstand 13. Umgekehrt ist ein Sichtabstand $A_1$ größer als ein Sichtabstand $A_n$. Die Aperturen sind jeweils durch eine nicht näher gezeigte Kameraöffnung der Kameras 16 gegeben. Für jedes der Volumenelemente 14a wird mit den oben beschriebenen Verfahren anhand eines gemessenen ersten Sichtwinkels ein zweiter Sichtwinkel $\sigma^*$ (nicht gezeigt) für Referenzbedingungen, also insbesondere einen gemeinsamen Referenz-Beleuchtungsabstand $G^*$ und Referenz-Sichtabstand $A^*$, berechnet. Bevorzugt beträgt der Referenz-Beleuchtungsabstand $G^* = 7$ m.

Häufig wird der gemessene Sichtwinkel $\sigma$ eines Volumenelements 14a bei einem ersten Umgebungsparameter (z.B. $G = 5$ m) sowohl durch einen Keilwinkel $\eta$ wie in Fig. 7 als auch durch einen Biegeradius R wie in Fig. 9 bis 11 verursacht. Wenn mit der Vorrichtung aus Fig. 12 zweite Sichtwinkel $\sigma^*$ bei einem vorgegebenen zweiten Umgebungsparameter (z.B. $G^* = 100$ m) für die Volumenelemente 14a einer gebogenen Scheibe 14 bestimmt werden sollen, so wird zunächst für jedes Volumenelement 14a mit dem oben beschriebenen Verfahren der durch seinen Biegeradius R und die Dicke d verursachte Sichtwinkel $\sigma_B$ berechnet und von dem gemessenen ersten Sichtwinkel $\sigma$ abgezogen ($\sigma_\eta = \sigma - \sigma_B$). Dabei können die Biegeradien R der Volumenelemente 14a über die Scheibe 14 variieren. Das Ergebnis der Subtraktion entspricht dem Sichtwinkel $\sigma_\eta$ für das jeweilige Volumenelement 14a, da angenommen wird, dass ein von Null verschiedener Wert von $\sigma_\eta$ durch einen in diesem Volumenelement vorhandenen Keilwinkel $\eta$ hervorgerufen wird.

Falls die Scheibe 14 - wie in Fig. 12 dargestellt - keine Biegung aufweist ($\sigma_B$ = 0), entspricht der gemessene erste Sichtwinkel $\sigma$ dem Sichtwinkel $\sigma_\eta$ des Keils gemäß Fig. 7.

Die oben genannte Entfernung G* = 100 m ist in der Praxis interessant, wenn die Lichtquelle in dieser Entfernung auftaucht. Um für diese Situation den Sichtwinkel $\sigma$* aus dem bei G = 5 m ermittelten Wert $\sigma$ zu bestimmen, wird für jedes Volumenelement 14a aus $\sigma_\eta$ - wie zu Fig. 7 und 8 beschrieben - der Sichtwinkel $\sigma_\eta$* für den Umgebungsparameter G* = 100 m bestimmt (sonstige Umgebungsparameter unverändert). Dann wird gegebenenfalls auch der durch einen Biegeradius R und die Dicke d des Volumenelements 14a verursachte Sichtwinkel $\sigma_B$* bei diesem Umgebungsparameter wie oben beschrieben für jedes Volumenelement 14a aus $\sigma_B$ berechnet und zu $\sigma_\eta$* addiert, sodass sich für einen zweiten Sichtwinkel $\sigma$* unter dem zweiten Umgebungsparameter insgesamt für jedes Volumenelement 14a ergibt:

$$\sigma^* = \sigma_B^* + \sigma_\eta^* \qquad\qquad (F12)$$

Wenn das Volumenelement 14a keinen Biegeradius R aufweist, dann gilt für den zweiten Sichtwinkel $\sigma$* = $\sigma_n$*.

Alternativ kann aus dem gemessenen Sichtwinkel $\sigma$ der zweite Sichtwinkel $\sigma$* auch für in einem Standard festgelegte Referenz-Umgebungsparameter G* = 7 m berechnet werden. Ein solcher Standard ist beispielsweise die eingangs genannte Regelung Nr. 43 der Wirtschaftskommission der Vereinten Nationen für Europa (UNECE). Zusätzlich kann für jedes Volumenelement 14a mit den bekannten oder ermittelten Werten für den Einfallswinkel $\kappa$ und den Keilwinkel $\eta$ mithilfe der Formel (F1) der zugehörige Doppelbildwinkel $\rho$ berechnet werden.

Die beschriebene Vorgehensweise erlaubt es bei einer wie in Fig. 12 dargestellten Anordnung trotz des Neigungswinkels 15 der Scheibe, den unterschiedlichen Beleuchtungsabständen $G_1$ bis $G_n$ sowie den unterschiedlichen Sichtabstände $A_1$ bis $A_n$ die ersten Sichtwinkel aller Volumenelemente 14a gleichzeitig für bekannte erste Umgebungsparameter zu messen und dann den zweiten Sichtwinkel $\sigma$* für jedes Volumenelement für zweite Umgebungsparameter zu berechnen. Dies bringt eine große Zeitersparnis bei der Bestimmung des Sichtwinkels, da sonst jedes Volumenelement zunächst durch eine entsprechende Bewegung in den Zustand der zweiten Umgebungsparameter gebracht werden müsste.

**Bezugszeichenliste:**

10, 10a    Beleuchtungseinrichtung
10b    Lichtleiste
11    Lichtquelle
11h    horizontaler Lichtquellenabstand
11v    vertikaler Lichtquellenabstand
12    horizontale Richtung
13    Abstand
14    Scheibe
14a    Volumenelement
15    Neigungswinkel
16    Kamera
16a    Target
16b    Kamerazeile
17    optischer Filter
18    Auswerteeinrichtung
19    einfallender Strahl
19a    primärer Lichtweg
19b    sekundärer Lichtweg
21a, 71a    Primärbild
21b, 71b    Sekundärbild
22    vertikaler Abstand
23    horizontaler Abstand
40    Ordinate
41a, 42a    Primärbildintensität
41b, 42b    Sekundärbildintensität
50    erster Spiegel
51    zweiter Spiegel
52    Gehäuse

53     Raumbedarf

70     Apertur

$\alpha, \kappa, \kappa^*$     Einfallswinkel

$\beta, \lambda, \xi, \varpi, \Omega$     Winkel

$v, \varphi$     Ausfallswinkel

$\sigma, \sigma_\eta, \sigma_\eta^*, \sigma_B,$     Sichtwinkel

$\eta$     Keilwinkel

$\rho$     Doppelbildwinkel

$A, A_1, A_n, A^*,$     Sichtabstand

d     Dicke

$G, Gs, G_1, G_n, G^*$     Beleuchtungsabstand

M     Krümmungsmittelpunkt

R     Biegeradius

## Patentansprüche

**1.** Vorrichtung zur Bestimmung eines Sichtwinkels ($\sigma$) einer Lichtquelle (11) an einem transparenten Objekt (14) mit

- einer Beleuchtungseinrichtung (10), die eine Vielzahl, zumindest teilweise gleichzeitig leuchtender punktförmiger Lichtquellen (11) aufweist, wobei die Lichtquellen einen Beleuchtungsabstand (G, G*) von dem transparenten Objekt haben, sich vor dem transparenten Objekt befinden und das Licht der Lichtquelle unter einem Einfallswinkel ($\kappa$) gegenüber der Oberflächennormalen auf das transparente Objekt (14) fällt,
- mindestens einer Kamera (16), die dazu eingerichtet ist, die Positionen eines Primärbilds (21a, 71a) und eines Sekundärbilds (21b, 71b) mehrerer gleichzeitig leuchtender Lichtquellen (11) auf einem 2-dimensionalen Target (16a) zur gleichen Zeit zu erfassen, wobei das Target (16a) einen Sichtabstand (A, A*) von dem transparenten Objekt hat, entlang des Lichtwegs hinter dem transparenten Objekt angeordnet ist und eine Aufnahmefläche oder Bildsensor der Kamera (16) bildet, wobei das Primärbild (21a, 71a) und das Sekundärbild (21b, 71b) einer Lichtquelle (11) durch ein von der Lichtquelle (11) beleuchtetes Volumenelement (14a) des transparenten Objekts (14) auf dem Target (16a) erzeugt sind, und
- einer Auswerteeinrichtung (18), welche dazu eingerichtet ist, basierend auf den Positionen des Primärbilds (21a, 71a) und des Sekundärbilds (21b, 71b) sowie abhängig von dem Sichtabstand (A, A*), dem Einfallswinkel ($\kappa$) und dem Beleuchtungsabstand (G, G*) den Sichtwinkel (o) des jeweiligen Volumenelements (14a) des transparenten Objekts (14) zu bestimmen, wobei der Sichtwinkel (o) den Winkel darstellt, unter dem die Kamera (16) das Primärbild (21a, 71a) und das Sekundärbild (21b, 71b) der Lichtquelle wahrnimmt.

**2.** Vorrichtung nach Anspruch 1

**dadurch gekennzeichnet, dass** die Auswerteeinrichtung (18) weiter dazu eingerichtet ist,
für mindestens ein Volumenelement (14a) des transparenten Objekts (14) basierend auf mindestens einem mit einer ersten Konfiguration mit einem bestimmten Sichtabstand, Neigungswinkel des transparenten Objekts, Einfallswinkel und Beleuchtungsabstand (G, A, $\kappa$) ermittelten ersten Sichtwinkel ($\sigma, \sigma_\eta, \sigma_B$) einen zweiten Sichtwinkel ($\sigma^*, \sigma_\eta^*, \sigma_B^*$) für eine von der ersten Konfiguration hinsichtlich Sichtabstand, Neigungswinkel des transparenten Objekts, Einfallswinkel und/oder Beleuchtungsabstand (G*, A*, $\kappa^*$) verschiedenen, zweiten Konfiguration zu bestimmen.

**3.** Vorrichtung nach Anspruch 1 oder 2, **dadurch gekennzeichnet, dass** die Lichtquellen (11) der Beleuchtungseinrichtung (10) derart separat ein- und ausschaltbar sind, dass eine schrittweise Erfassung der Primärbilder (21a, 71a) und Sekundärbilder (21b, 71b) aller Lichtquellen (11) erfolgt, wobei in jedem Schritt eine Teilmenge der Vielzahl der Lichtquellen (11) gleichzeitig eingeschaltet und eine andere Teilmenge zur gleichen Zeit ausgeschaltet ist, wobei vorzugsweise zumindest bei einem Teil zweier benachbarter Lichtquellen (11) eine Lichtquelle (11) eingeschaltet und die andere Lichtquelle (11) ausgeschaltet ist.

**4.** Vorrichtung nach einem der vorhergehenden Ansprüche, **dadurch gekennzeichnet, dass** die Kamera (16) lediglich die vertikale Komponente der Positionen des Primärbilds (21a, 71a) und des Sekundärbilds (21b, 71b) jeder Lichtquelle (11) erfasst und die Auswerteeinrichtung (18) zur Bestimmung des Sichtwinkels (o) lediglich die erfassten vertikalen Positionen heranzieht.

**5.** Vorrichtung nach einem der vorhergehenden Ansprüche, **dadurch gekennzeichnet, dass** benachbarte Lichtquellen (11) der Beleuchtungseinrichtung (10) derart ansteuerbar sind, dass sie eine unterschiedliche Lichtstärke und/oder Farbe aufweisen.

**6.** Vorrichtung nach einem der vorhergehenden Ansprüche, **dadurch gekennzeichnet, dass** die Auswerteeinrichtung (18) dazu eingerichtet ist, für mindestens ein Volumenelement (14a) des transparenten Objekts (14) anhand des ermittelten Sichtwinkels $(\sigma, \sigma_\eta, \sigma_B)$ den Doppelbildwinkel $(\rho)$ für das jeweilige Volumenelement (14a) zu bestimmen.

**7.** Verfahren zur Bestimmung eines Sichtwinkels $(\sigma)$ einer Lichtquelle (11) an einem transparenten Objekt (14),

wobei das transparente Objekt (14) mittels einer Beleuchtungseinrichtung (10) mit einer Vielzahl, zumindest teilweise gleichzeitig leuchtender punktförmiger Lichtquellen (11) beleuchtet wird, wobei die Lichtquellen einen Beleuchtungsabstand (G, G*) von dem transparenten Objekt haben, sich vor dem transparenten Objekt befinden und das Licht der Lichtquelle unter einem Einfallswinkel $(\kappa)$ gegenüber der Oberflächennormalen auf das transparente Objekt (14) fällt,
wobei die Positionen eines Primärbilds (21a, 71a) und eines Sekundärbilds (21b, 71b) mehrerer gleichzeitig leuchtender Lichtquellen (11) durch mindestens eine Kamera (16) auf einem 2-dimensionalen Target (16a) zur gleichen Zeit erfasst werden, wobei das Target (16a) einen Sichtabstand (A, A*) von dem transparenten Objekt hat, entlang des Lichtwegs hinter dem transparenten Objekt angeordnet ist und eine Aufnahmefläche oder Bildsensor der Kamera (16) bildet, wobei das Primärbild (21a, 71a) und das Sekundärbild (21b, 71b) einer Lichtquelle (11) durch ein von der jeweiligen Lichtquelle (11) beleuchtetes Volumenelement (14a) des transparenten Objekts (14) auf dem Target (16a) erzeugt werden, und
wobei mittels einer Auswerteeinrichtung (18) basierend auf den Positionen des Primärbilds (21a, 71a) und des Sekundärbilds (21b, 71b) sowie abhängig von dem Sichtabstand (A, A*), dem Einfallswinkel $(\kappa)$ und dem Beleuchtungsabstand (G, G*) der Sichtwinkel $(o)$ des jeweiligen Volumenelements (14a) des transparenten Objekts (14) bestimmt wird, wobei der Sichtwinkel $(o)$ den Winkel darstellt, unter dem die Kamera (16) das Primärbild (21a, 71a) und das Sekundärbild (21b, 71b) der Lichtquelle wahrnimmt.

**8.** Verfahren nach Anspruch 7,
**dadurch gekennzeichnet, dass** für mindestens ein Volumenelement (14a) des transparenten Objekts (14) basierend auf mindestens einem mit einer ersten Konfiguration mit einem bestimmten Sichtabstand, Neigungswinkel des transparenten Objekts, Einfallswinkel und Beleuchtungsabstand (G, A, $\kappa$) ermittelten ersten Sichtwinkel $(\sigma, \sigma_\eta, \sigma_B)$ ein zweiter Sichtwinkel $(\sigma^*, \sigma_\eta^*, \sigma_B^*)$ für eine von der ersten Konfiguration hinsichtlich Sichtabstand, Neigungswinkel des transparenten Objekts, Einfallswinkel und/oder Beleuchtungsabstand (G*, A*, $\kappa^*$) verschiedenen, zweiten Konfiguration bestimmt wird.

**9.** Verfahren nach Anspruch 7 oder 8, **dadurch gekennzeichnet, dass** die Lichtquellen (11) der Beleuchtungseinrichtung (10) derart separat ein- und ausgeschaltet werden, dass eine schrittweise Erfassung der Primärbilder (21a, 71a) und Sekundärbilder (21b, 71b) aller Lichtquellen (11) erfolgt, wobei in jedem Schritt eine Teilmenge der Vielzahl der Lichtquellen (11) gleichzeitig eingeschaltet und eine andere Teilmenge zur gleichen Zeit ausgeschaltet wird, wobei vorzugsweise zumindest bei einem Teil zweier benachbarter Lichtquellen (11) eine Lichtquelle (11) eingeschaltet und die andere Lichtquelle (11) ausgeschaltet wird.

**10.** Verfahren nach einem der Ansprüche 7 bis 9, **dadurch gekennzeichnet, dass** durch die Kamera (16) lediglich die vertikalen Komponenten der Positionen des Primärbilds (21a, 71a) und des Sekundärbilds (21b, 71b) jeder Lichtquelle (11) erfasst und durch die Auswerteeinrichtung (18) zur Bestimmung des Sichtwinkels $(\sigma_\eta, \sigma_\eta^* \sigma_B)$ lediglich die erfassten vertikalen Komponenten der Positionen herangezogen werden.

**11.** Verfahren nach einem der Ansprüche 7 bis 10, **dadurch gekennzeichnet, dass** benachbarte Lichtquellen (11) der Beleuchtungseinrichtung (10) derart angesteuert werden, dass sie eine unterschiedliche Lichtstärke und/oder Farbe aufweisen.

**12.** Verfahren nach einem der Ansprüche 7 bis 11, **dadurch gekennzeichnet, dass** das transparente Objekt (14) während der Bestimmung des Sichtwinkels $(\sigma)$ relativ zu der Beleuchtungseinrichtung (10) und dem Target (16a) bewegt wird.

**13.** Verfahren nach einem der Ansprüche 8 bis 12, **dadurch gekennzeichnet, dass** für den Fall, dass ein erster Sichtwinkel $(\sigma_\eta)$ bestimmt wurde, die Bestimmung des zweiten Sichtwinkels $(\sigma_\eta^*)$ der zweiten Konfiguration folgende Schritte umfasst:

- Berechnung eines Keilwinkels ($\eta$) für das jeweilige Volumenelement (14a) basierend auf dem ermittelten ersten Sichtwinkel ($\sigma_\eta$) und
- Berechnung des zweiten Sichtwinkels ($\sigma_\eta$*) unter Verwendung des berechneten Keilwinkels ($\eta$).

**14.** Verfahren nach einem der Ansprüche 7 bis 13, **dadurch gekennzeichnet, dass** ein durch einen Biegeradius (R) und eine Dicke (d) des transparenten Objekts im jeweiligen Volumenelement (14a) hervorgerufener Sichtwinkelanteil ($\sigma_B$) des Sichtwinkels bestimmt wird.

**15.** Verfahren nach einem der Ansprüche 7 bis 14, **dadurch gekennzeichnet, dass** ein durch einen Keilwinkel ($\eta$) im jeweiligen Volumenelement (14a) des transparenten Objekts hervorgerufener Sichtwinkelanteil ($\sigma_\eta$) des Sichtwinkels bestimmt wird.

**16.** Verfahren nach einem der Ansprüche 7 bis 15, **dadurch gekennzeichnet, dass** für mindestens ein Volumenelement (14a) des transparenten Objekts (14) anhand des ermittelten Sichtwinkels ($\sigma$, $\sigma_\eta$, $\sigma_B$) der Doppelbildwinkel ($\rho$) für das jeweilige Volumenelement (14a) bestimmt wird.

**Claims**

**1.** Apparatus to determine an angle of vision ($\sigma$) of a light source (11) on a transparent object (14) with

- an illuminating device (10), which has multiple, partially simultaneously illuminated, punctiform light sources (11), whereby the light sources (11) have an illuminating distance (G, G*) from the transparent object (14), are located infront of the object (14) and the light of the light sources falls on the transparent object (14) at an angle of incidence ($\kappa$) with regard to the surface normal;
- at least one camera (16), which is set up to capture simultaneously the positions of a primary image (21a, 71a) and a secondary image (21b, 71b) of multiple, simultaneously illuminated light sources (11) on a 2-dimensional target (16a), whereby the target (16a) has a viewing distance (A, A*) from the transparent object, is arranged behind the transparent object along the light path and is formed by a recording surface or image sensor of the at least one camera, whereby the primary image (21a, 71a) and the secondary image (21b, 71b) of one light source (11) are generated by one volume element (14a) of the transparent object (14) illuminated by the light source on the target (16a); and
- an evaluation device (18), which is set up to determine the angle of vision ($\sigma$) of the respective volume element (14a) of the transparent object (14) based on the positions of the primary image (21a, 71a) and the secondary image (21b, 71b) as well as based on the viewing distance (A, A*), the angle of incidence ($\kappa$) and the illuminating distance (G, G*), whereby the angle of vision ($\sigma$) is the angle at which the at least one camera (16) perceives the primary image (21a, 71a) and the secondary image (21b, 71b) of the light source (11).

**2.** Apparatus according to claim 1,
**characterized in that** the evaluation device (18) is further set up for at least one volume element (14a) of the transparent object, to determine a second angle of vision ($\sigma$*, $\sigma_\eta$*, $\sigma_B$*) for a second configuration, which is different from the first configuration with regard to the viewing distance, inclination angle of the transparent object, angle of incidence and/or illuminating distance (G*, A*, $\kappa$*), based on at least one first angle of vision ($\sigma$, $\sigma_\eta$, $\sigma_B$) determined with a first configuration with a predefined viewing distance, inclination angle of the transparent object, incidence angle and illuminating distance (G, A, $\kappa$).

**3.** Apparatus according to claims 1 or 2, **characterized in that** the light sources (11) of the illuminating device (10) can be switched on and off separately so that there is sequential recording of the primary (21a, 71a) and secondary images (21b, 71b) of all light sources (11), whereby in each step a subset of multiple light sources (11) is switched on simultaneously and another subset is switched off at the same time, whereby preferably for at least one subset of two adjacent light sources one light source (11) is switched on and the other light source (11) is switched off.

**4.** Apparatus according to any one of the previous claims, **characterized in that** the camera (16) only captures the vertical component of the position of the primary image (21a, 71a) and the secondary image (21b, 71b) of each light source (11), and the evaluation device (18) only uses the captured vertical positions for determining the angle of vision $\sigma$).

5. Apparatus according to any one of the previous claims, **characterized in that** the adjacent light sources (11) of the illuminating device (10) can be controlled such that they have different light intensity and/or colour.

6. Apparatus according to any one of the previous claims, **characterized in that** the evaluation device (18) is further set up to calculate for at least one volume element (14a) of the transparent object (14) a secondary image angle ($\rho$) for the respective volume element (14a) using the determined angle of vision ($\sigma$, $\sigma_\eta$, $\sigma_B$)

7. Method to determine the angle of vision (o) of a light source (11) on a transparent object (14), whereby the transparent object (14) is illuminated by an illuminating device (10) with multiple, simultaneously illuminated, punctiform light sources (11), whereby the light sources (11) have an illuminating distance (G, G*) from the transparent object (14), are located infront of the object (14) and the light of the light sources falls on the transparent object (14) at an angle of incidence ($\kappa$) with regard to the surface normal,
whereby the positions of a primary image (21a, 71a) and a secondary image (21b, 71b) of multiple simultaneously illuminated light sources (11) are simultaneously captured by at least one camera (16) on a two-dimensional target (16a), whereby the target (16a) has a viewing distance (A, A*) from the transparent object, is arranged behind the transparent object along the light path and is formed by a recording surface or image sensor of the at least one camera, whereby the primary image (21a, 71a) and the secondary image (21b, 71b) of one light source (11) are generated on the target (16a) through one volume element (14a) of the transparent object (14) illuminated by the respective light source (11), and whereby by means of an evaluation device (18) the angle of vision ($\sigma$) of the respective volume element (14a) of the transparent object (14) based on the positions of the primary image (21a, 71a) and the secondary image (21b, 71b) as well as based on the viewing distance (A, A*), the angle of incidence ($\kappa$) and the illuminating distance (G, G*) is determined, whereby the angle of vision ($\sigma$) is the angle at which the at least one camera (16) perceives the primary image (21a, 71a) and the secondary image (21b, 71b) of the light source (11).

8. Method according to claim 7,
**characterized in that** for at least one volume element (14a) of the transparent object a second angle of vision ($\sigma^*$, $\sigma_\eta^*$, $\sigma_B^*$) is determined for a second configuration, which is different from the first configuration with regard to the viewing distance, inclination angle of the transparent object, angle of incidence and/or illuminating distance (G*, A*, $\kappa^*$), based on at least one first angle of vision ($\sigma$, $\sigma_\eta$, $\sigma_B$) determined with a first configuration with a predefined viewing distance, inclination angle of the transparent object, incidence angle and illuminating distance (G, A, $\kappa$).

9. Method according to claims 7 or 8, **characterized in that** the light sources (11) of the illuminating device (10) can be switched on and off separately so that there is sequential recording of the primary (21a, 71a) and secondary images (21b, 71b) of all light sources (11), whereby in each step a subset of multiple light sources (11) is switched on simultaneously and another subset is switched off at the same time, whereby preferably for at least one subset of two adjacent light sources (11) one light source (11) is switched on and the other light source (11) is switched off.

10. Method according to any one of claims 7 to 9, **characterized in that** the camera (16) only captures the vertical components of the position of the primary image (21a, 71a) and the secondary image (21b, 71b) of each light source (11) and the evaluation device (18) only uses the captured vertical positions for determining the angle of vision ($\sigma_\eta$, $\sigma_\eta^*$, $\sigma_B$).

11. Method according to any one of claims 7 to 10, **characterized in that** the adjacent light sources (11) of the illuminating device (10) can be controlled such that they have a different light intensity and/or colour.

12. Method according to any one of claims 7 to 11, **characterized in that** the transparent object (14) is moved relative to the illuminating device (10) and the target (16a) when determining the angle of vision ($\sigma$).

13. Method according to any one of claim 7 to 12, **characterized in that** the determination of the second angle of vision ($\sigma_\eta^*$) of the second configuration includes the following steps when a first angle of vision ($\sigma_\eta$) was determined:

• Calculation of a wedge angle ($\eta$) for the respective volume element (14a) based on the ascertained first angle of vision ($\sigma_\eta$), and
• Calculation of the second angle of vision ($\sigma_\eta^*$) by using the calculated wedge angle ($\eta$).

14. Method according to any one of claims 7 to 13, **characterized in that** a fraction of the angle of vision ($\sigma_B$) caused by a bending radius (R) and a thickness (d) of the transparent object in the respective volume element (14a) is determined.

**15.** Method according to any one of claims 7 to 14, **characterized in that** a fraction of the angle of vision ($\sigma_\eta$) caused by a wedge angle ($\eta$) in the respective volume element (14a) of the transparent object is determined.

**16.** Method according to any one of claims 7 to 15, **characterized in that** for at least one volume element (14a) of the transparent object (14) a secondary image angle ($\rho$) for the respective volume element (14a) is calculated using the determined angle of vision ($\sigma$, $\sigma_\eta$, $\sigma_B$).

**Revendications**

**1.** Dispositif de détermination d'un angle de vision ($\sigma$) d'une source de lumière (11) sur un objet transparent (14), avec

- un système d'éclairage (10), qui comporte une pluralité de sources de lumière (11) ponctuelles éclairant au moins en partie simultanément, sachant que les sources de lumière ont une distance d'éclairage (G, G*) de l'objet transparent, se trouvent avant l'objet transparent et que la lumière de la source de lumière tombe sous un angle d'incidence ($\kappa$) par rapport aux normales de surface sur l'objet transparent (14),
- au moins une caméra (16), qui est agencée pour saisir au même moment les positions d'une image primaire (21a, 71a) et d'une image secondaire (21b, 71b) de plusieurs sources de lumière (11) éclairant simultanément sur une cible bidimensionnelle (16a), sachant que la cible (16a) a une distance de vision (A, A*) de l'objet transparent, est disposée le long de la trajectoire lumineuse derrière l'objet transparent et forme une surface de réception ou un capteur d'image de la caméra (16), sachant que l'image primaire (21a, 71a) et l'image secondaire (21b, 71b) d'une source de lumière (11) sont produites par un élément de volume (14a) éclairé par la source de lumière (11) de l'objet transparent (14) sur la cible (16a) et
- un système d'évaluation (18), lequel est agencé pour déterminer l'angle de vision ($\sigma$) de l'élément de volume respectif (14a) de l'objet transparent (14) en se basant sur les positions de l'image primaire (21a, 71a) et de l'image secondaire (21b, 71b) et en fonction de la distance de vision (A, A*), de l'angle d'incidence ($\kappa$) et de la distance d'éclairage (G, G*), sachant que l'angle de vision ($\sigma$) représente l'angle sous lequel la caméra (16) perçoit l'image primaire (21a, 71a) et l'image secondaire (21b, 71b) de la source de lumière.

**2.** Dispositif selon la revendication 1,
**caractérisé en ce que** le système d'évaluation (18) est en plus agencé pour déterminer pour au moins un élément de volume (14a) de l'objet transparent (14) un deuxième angle de vision ($\sigma^*$, $\sigma_\eta^*$, $\sigma_B^*$) pour une deuxième configuration différente de la première configuration eu égard à la distance de vision, à l'angle d'inclinaison de l'objet transparent, à l'angle d'incidence et/ou à la distance d'éclairage (G*, A*, K*) en se basant sur au moins un premier angle de vision ($\sigma$, $\sigma_\eta$, $\sigma_B$) déterminé avec une première configuration avec une certaine distance de vision, un certain angle d'inclinaison de l'objet transparent, un certain angle d'incidence et une certaine distance d'éclairage (G, A, $\kappa$).

**3.** Dispositif selon la revendication 1 ou 2, sachant que les sources de lumière (11) du système d'éclairage (10) peuvent être mises en marche et arrêtées séparément de telle manière qu'une saisie progressive des images primaires (21a, 71a) et des images secondaires (21b, 71b) de toutes les sources de lumière (11) a lieu, sachant que dans chaque étape, une quantité partielle de la pluralité des sources de lumière (11) est simultanément allumée et une autre quantité partielle est arrêtée au même moment, sachant de préférence qu'au moins pour une partie de deux sources de lumière voisines (11), une source de lumière (11) est allumée et l'autre source de lumière (11) est éteinte.

**4.** Dispositif selon l'une quelconque des revendications précédentes, **caractérisé en ce que** la caméra (16) ne saisit que les composants verticaux des positions de l'image primaire (21a, 71a) et de l'image secondaire (21b, 71b) de chaque source de lumière (11) et le système d'évaluation (18) ne tient compte que des positions verticales saisies pour la détermination de l'angle de vision ($\sigma$).

**5.** Dispositif selon l'une quelconque des revendications précédentes, **caractérisé en ce que** les sources de lumière voisines (11) du système d'éclairage (10) peuvent être activées de telle manière qu'elles comportent une intensité lumineuse et/ou une couleur différente.

**6.** Dispositif selon l'une quelconque des revendications précédentes, **caractérisé en ce que** le système d'évaluation (18) est agencé pour déterminer l'angle d'image double ($\rho$) pour l'élément de volume respectif (14a) pour au moins un élément de volume (14a) de l'objet transparent (14) à l'aide de l'angle de vision déterminé ($\sigma$, $\sigma_\eta$, $\sigma_B$).

7. Procédé de détermination d'un angle de vision ($\sigma$) d'une source de lumière (11) sur un objet transparent (14),

sachant que l'objet transparent (14) est éclairé au moyen d'un système d'éclairage (10) avec une pluralité, de sources de lumière (11) ponctuelles éclairant au moins en partie simultanément, sachant que les sources de lumière ont une distance d'éclairage (G, G*) de l'objet transparent, se trouvent devant l'objet transparent et la lumière de la source de lumière tombe sous un angle d'incidence ($\kappa$) par rapport aux normales de surface sur l'objet transparent (14),

sachant que les positions d'une image primaire (21a, 71a) et d'une image secondaire (21b, 71b) de plusieurs sources de lumière (11) éclairant simultanément sont saisies au même moment par au moins une caméra (16) sur une cible bidimensionnelle (16a), sachant que la cible (16a) a une distance de vision (A, A*) de l'objet transparent , est disposée le long de la trajectoire lumineuse derrière l'objet transparent et forme une surface de réception ou un capteur d'image de la caméra (16), sachant que l'image primaire (21a, 71a) et l'image secondaire (21b, 71b) d'une source de lumière (11) sont produites par un élément de volume (14a) de l'objet transparent (14) éclairé par la source de lumière respective (11) sur la cible (16a) et

sachant que l'angle de vision ($\sigma$) de l'élément de volume respectif (14a) de l'objet transparent (14) est déterminé au moyen d'un système d'évaluation (18) en se basant sur les positions de l'image primaire (21a, 71a) et de l'image secondaire (21b, 71b) ainsi qu'en fonction de la distance de vision (A, A*), de l'angle d'incidence ($\kappa$) et de la distance d'éclairage (G, G*), sachant que l'angle de vision ($\sigma$) représente l'angle sous lequel la caméra (16) perçoit l'image primaire (21a, 71a) et l'image secondaire (21b, 71b) de la source de lumière.

8. Procédé selon la revendication 7, **caractérisé en ce qu'**un deuxième angle de vision ($\sigma^*$, $\sigma_\eta^*$, $\sigma_B^*$) pour une deuxième configuration différente de la première configuration eu égard à la distance de vision, à l'angle d'inclinaison de l'objet transparent, à l'angle d'incidence et/ou à la distance d'éclairage (G*, A*, $\kappa^*$) est déterminé pour au moins un élément de volume (14a) de l'objet transparent (14) en se basant sur au moins un premier angle de vision ($\sigma$, $\sigma_\eta$, $\sigma_B$ )déterminé avec une première configuration avec une certaine distance de vision, un certain angle d'inclinaison de l'objet transparent, un certain angle d'incidence et une certaine distance d'éclairage (G, A, ,$\kappa$).

9. Procédé selon la revendication 7 ou 8, **caractérisé en ce que** les sources de lumière (11) du système d'éclairage (10) sont allumées et éteintes séparément de telle manière qu'une saisie progressive des images primaires (21a, 71a) et des images secondaires (21b 71b) de toutes les sources de lumière (11) a lieu, sachant que dans chaque étape une quantité partielle de la pluralité de sources de lumière (11) est allumée simultanément et une autre quantité partielle est éteinte au même moment, sachant de préférence qu'au moins pour une partie de deux sources de lumière voisines (11), une source de lumière (11) est allumée et l'autre source de lumière (11) est éteinte.

10. Procédé selon l'une quelconque des revendications 7 à 9, **caractérisé en ce que** seuls les composants verticaux des positions de l'image primaire (21a, 71a) et de l'image secondaire (21b, 71b) de chaque source de lumière (11) sont saisis par la caméra (16) et seuls les composants verticaux saisis des positions sont pris en compte par le système d'évaluation (18) pour la détermination de l'angle de vision ($\sigma_\eta$, $\sigma_\eta^*$, $\sigma_B$).

11. Procédé selon l'une quelconque des revendications 7 à 10, **caractérisé en ce que** les sources de lumière voisines (11) du système d'éclairage (10) sont activées de telle manière qu'elles comportent une intensité lumineuse et/ou une couleur différente.

12. Procédé selon l'une quelconque des revendications 7 à 11, **caractérisé en ce que** l'objet transparent (14) est déplacé pendant la détermination de l'angle de vision ($\sigma$) par rapport au système d'éclairage (10) et à la cible (16a).

13. Procédé selon l'une quelconque des revendications 8 à 12, **caractérisé en ce qu'**au cas où un premier angle de vision ($\sigma_\eta$) a été déterminé, la détermination du deuxième angle de vision ($\sigma_\eta^*$) de la deuxième configuration, comprend les étapes suivantes :

• calcul d'un angle de coin ($\eta$) pour l'élément de volume respectif (14a) en se basant sur le premier angle de vision ($\sigma_\eta$) déterminé et
• calcul du deuxième angle de vision ($\sigma_\eta^*$) en utilisant l'angle de coin ($\eta$) calculé.

14. Procédé selon l'une quelconque des revendications 7 à 13, **caractérisé en ce qu'**une partie d'angle de vision ($\sigma_B$) engendrée par un rayon de courbure (R) et une épaisseur (d) de l'objet transparent dans l'élément de volume respectif (14a) est déterminée.

**15.** Procédé selon l'une quelconque des revendications 7 à 14, **caractérisé en ce qu'**une partie d'angle de vision ($\sigma_\eta$) de l'angle de vision engendrée par un angle de coin ($\eta$) dans l'élément de volume respectif (14a) de l'objet transparent est déterminée.

**16.** Procédé selon l'une quelconque des revendications 7 à 15, **caractérisé en ce que** pour au moins un élément de volume (14a) de l'objet transparent (14), l'angle d'image double ($\rho$) est déterminé pour l'élément de volume respectif (14a) à l'aide de l'angle de vision déterminé ($\sigma$, $\sigma_\eta$, $\sigma_B$).

**Fig. 1**

**Fig. 2**

ρ

14

19

19a

19b

**Fig. 2a**

21b

16a

22

23

21a

**Fig. 3**

40

41a 42a 41a 42a 41a 42a

41b 42b 41b 42b 41b 42b

**Fig. 4**

**Fig. 5**

**Fig. 6**

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

**In der Beschreibung aufgeführte Patentdokumente**

- US 20100232677 A1